(19) Europäisches Patentamt / European Patent Office / Office européen des brevets

(11) **EP 3 917 073 A1**

(12) **DEMANDE DE BREVET EUROPEEN**

(43) Date de publication:
01.12.2021 Bulletin 2021/48

(51) Int Cl.:
*H04L 9/08* (2006.01)   *H04L 9/14* (2006.01)
*H04L 9/30* (2006.01)   *H04W 12/0431* (2021.01)

(21) Numéro de dépôt: 21175809.9

(22) Date de dépôt: 25.05.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 27.05.2020 FR 2005595

(71) Demandeur: IDEMIA France
92400 Courbevoie (FR)

(72) Inventeurs:
• GIRAUD, Christophe
33600 PESSAC (FR)
• DOTTAX, Emmanuelle
33400 TALENCE (FR)

(74) Mandataire: Cabinet Beau de Loménie
158, rue de l'Université
75340 Paris Cedex 07 (FR)

(54) **ÉTABLISSEMENT EFFICACE DE SESSIONS SÉCURISÉES POUR L'ANONYMAT DANS LES RÉSEAUX 5G**

(57)    L'invention concerne un procédé cryptographique comprenant une phase d'initialisation pour déterminer un point générateur provisoire G' égal à un premier produit $G'=[d']G$, où d' est un premier scalaire aléatoire formant une clé secrète de N bits et G est un point générateur d'une courbe elliptique ; et déterminer une clé provisoire Q' égale à un deuxième produit $Q'=[d']Q$, où Q est un point de la courbe elliptique formant une clé publique. Au cours d'une phase de chiffrement, un deuxième scalaire aléatoire formant une deuxième clé secrète k de M bits, avec M < N ; une clé publique P est calculé telle que $P=[k]G'$; une coordonnée d'un point intermédiaire SP1, de la courbe elliptique, égal à un quatrième produit $SP1=[k]Q'$ ; au moins une clé par application d'une fonction de dérivation (F1) ; et des données (T1) sont chiffrées à partir de ladite au moins une clé.

FIG.3

**Description**

Domaine Technique

L'invention se rapporte au domaine de la cryptographie et concerne plus particulièrement la mise en œuvre de traitements cryptographiques pour chiffrer des données que l'on souhaite transmettre de façon sécurisée depuis un dispositif vers une entité externe. L'invention concerne notamment le chiffrement d'un identifiant de module d'identité de souscripteur embarqué, ainsi que la transmission d'un tel identifiant sous forme chiffrée, afin d'authentifier un terminal de télécommunications auprès d'un réseau de télécommunications.

Technique antérieure

En télécommunications, la « 4G » fait référence à la quatrième génération des standards pour la téléphonie mobile correspondant au LTE-Advanced (IMT-Advanced). Les réseaux 4G, comportant un cœur de réseau basé sur IP, ont permis d'offrir des débits et des services plus performants que ce qui était possible dans les précédentes générations 2G ou 3G.

De façon connue, pour accéder à un réseau mobile 4G et utiliser les services associés, un terminal de télécommunications (téléphone « smartphone » ou autre) doit transmettre des données d'identification afin de s'authentifier auprès du réseau. Pour ce faire, un module d'identité de souscripteur (une carte SIM par exemple) est généralement embarqué dans le terminal afin de transmettre un identifiant IMSI (pour « International Mobile Subscriber Identity ») du souscripteur au réseau 4G et accomplir une procédure d'authentification avec le réseau 4G.

Des problèmes de sécurité et des risques d'atteinte à la vie privée ont cependant été constatés dans le contexte de la 4G. En particulier, la manque de sécurisation lors de la transmission de l'identifiant IMSI depuis le terminal au réseau 4G expose le souscripteur à des risques d'interception de son identifiant IMSI par des tiers malveillants dits « intercepteur d'IMSI » ou « IMSI catchers ». A l'aide d'un système de surveillance utilisé pour intercepter le trafic des communications mobiles, un tiers malveillant est en effet capable de récupérer à distance des informations sensibles (dont l'IMSI) ou tracer les mouvements des utilisateurs des terminaux 4G. Pour ce faire, un intercepteur d'IMSI simule une fausse antenne-relais en s'intercalant entre le réseau de l'opérateur de téléphonique et le terminal client cible.

La cinquième génération - dite 5G - des standards pour la téléphonie mobile prolonge l'exploration technologique LTE (pour « Long Term Evolution ») et offre des débits et des services encore plus performants. La génération 5G des réseaux de télécommunications a ainsi introduit des mesures pour renforcer la sécurité de la vie privée des utilisateurs, et notamment pour combattre l'interception illicite des identifiants de souscripteur lors de l'authentification des terminaux auprès des réseaux 5G.

La 5G prévoit en particulier des traitements cryptographiques qui sont mis en œuvre par les modules d'identité de souscripteur embarqués (par exemple de type cartes SIM, « eSIM » pour « embedded SIM », ou autres) pour chiffrer les identifiants (SUPI pour « Subscription Permanent Identifier ») des souscripteurs. Les identifiants SUPI sont ainsi transmis sous forme chiffrée depuis les modules d'identité de souscripteur embarqués vers les réseaux 5G associés.

Pour ce faire, les module d'identité de souscripteur embarqués comportent des moyens de traitement cryptographique aptes à générer un identifiant chiffré dit « SUCI » (pour « Subscription Concealed Identifier ») à partir de l'identifiant SUPI et de clés cryptographiques. La fourniture de l'identifiant chiffré SUCI permet au terminal client de s'authentifier de façon sécurisée auprès du réseau et de recevoir un identifiant provisoire qui se substitue à son identifiant chiffré SUCI et lui permet de s'authentifier régulièrement auprès du réseau.

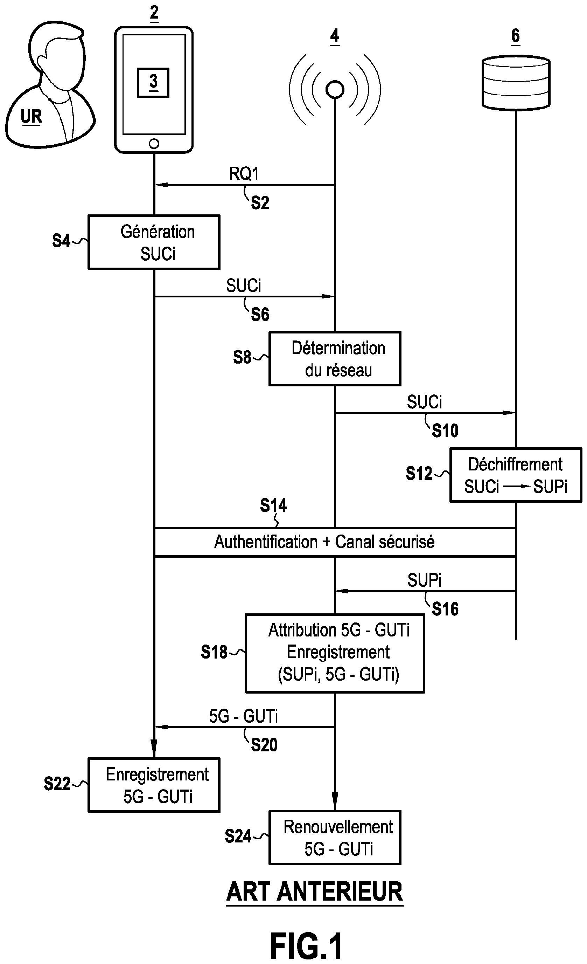

La **figure 1** illustre schématiquement un terminal de télécommunications 2 d'un utilisateur UR, ce terminal étant apte à coopérer avec un réseau mobile 5G (noté 6) via un point d'accès 4 (ou antenne relais par exemple). Dans cet exemple, le terminal utilise un module d'identité de souscripteur embarqué 3 pour générer (S4) un identifiant chiffré SUCI en réponse à la réception (S2) d'une requête RQ1 provenant du point d'accès 4. L'identifiant chiffré SUCI est transmis (S6) dans un message MSG1 au point d'accès 4, ce dernier déterminant alors (S8), à partir du SUCI, que le réseau 6 est le réseau associé au souscripteur UR. A noter que le point d'accès 4 ne dispose normalement pas des moyens nécessaires pour déchiffrer lui-même l'identifiant SUCI.

Le point d'accès 4 envoie (S10) ainsi l'identifiant chiffré SUCI (avec d'autres informations associées) au réseau 6 qui déchiffre (S12) ensuite l'identifiant chiffré SUCI pour en déduire l'identifiant SUPI du souscripteur. Le réseau 6 et le module d'identité de souscripteur 3 réalisent ensemble une procédure d'authentification mutuelle et établissent un canal sécurisé (étape S14). Une fois cette étape S14 réalisée, le réseau 6 transmet (S16) au point d'accès 4 l'identifiant SUPI sous sa forme déchiffrée. A partir du SUPI, le point d'accès détermine (S18) alors un identifiant provisoire nommé « 5G-GUTI » qu'il enregistre en association avec l'identifiant SUPI du souscripteur UR. Le point d'accès 4 envoie (S20) en outre l'identifiant provisoire 5G-GUTI au module d'identité de souscripteur embarqué 3 qui l'enregistre (S22) localement.

Par la suite, le module d'identité de souscripteur embarqué 3 peut s'authentifier régulièrement auprès du réseau 6 à l'aide de son identifiant provisoire 5G-GUTI qu'il transmet au point d'accès 4. Ainsi, l'identifiant d'utilisateur SUPI n'est jamais communiqué sous forme déchiffrée entre le terminal 2 et le point d'accès 4, ce qui permet d'éviter toutes interceptions non autorisées du SUPI par des tiers malveillants surveillants les communications. Le point d'accès 4 peut en outre renouveler (S24) régulièrement l'identifiant provisoire 5G-GUTI attribué au module d'identité de souscripteur embarqué 3 pour limiter les risques de traçage du terminal 2 par un tiers malveillant.

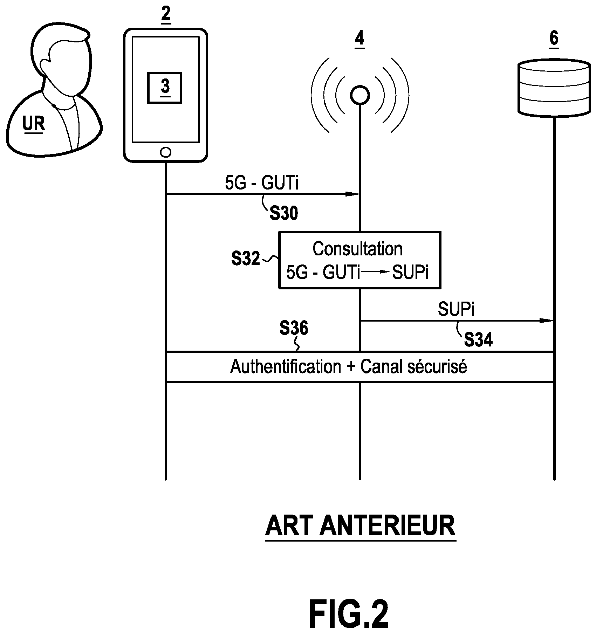

Comme illustré en **figure 2,** le module d'identité de souscripteur embarqué 3 peut ultérieurement s'authentifier à nouveau en transmettant (S30) son identifiant provisoire 5G-GUTI courant au point d'accès 4 qui consulte alors sa base de données pour retrouver l'identifiant SUPI associé (S32). Le point d'accès 4 transmet (S34) ensuite au réseau 6 l'identifiant SUPI récupéré dans sa base de données. A partir du SUPI, le réseau 6 peut ainsi réaliser une nouvelle procédure d'authentification et d'établissement d'un canal sécurisé (S36).

Les mesures décrites ci-dessus ont permis de sécuriser l'identifiant de souscripteur SUPI lors de l'authentification des terminaux clients auprès des réseaux 5G, limitant ainsi les risques d'interceptions frauduleuses par des tiers malveillants. Les données personnelles et la vie privée des utilisateurs sont donc mieux protégées.

Cependant, un problème réside en ce que les traitements cryptographiques nécessaires pour chiffrer les identifiants SUPI sont très coûteux en ressources et en temps de traitement, ce qui dégrade les performances des terminaux clients lorsque ceux-ci accèdent à un réseau 5G et utilisent des services associés.

Il n'existe pas aujourd'hui de solution cryptographique satisfaisante permettant d'obtenir un bon compromis entre un haut niveau de sécurité d'un identifiant de souscripteur et un accès performant à un réseau de télécommunications (authentification rapide et sécurisée), que ce soit dans un réseau 5G ou dans un quelconque autres type de réseau de télécommunications. Plus généralement, il existe un besoin pour un traitement cryptographique efficace permettant de chiffrer ou déchiffrer des données quelconques (que ce soit un identifiant SUCI ou d'autres données dans un autre contexte) tout en offrant un bon compromis entre niveau de sécurité du chiffrement et performances du chiffrement (coût en ressources, temps de traitement, etc.).

Exposé de l'invention

A cet effet, la présente invention concerne un premier procédé de traitement cryptographique, mis en œuvre par un premier dispositif, qui permet le chiffrement de données. Plus particulièrement, l'invention vise un premier procédé de traitement cryptographique mis en œuvre par un dispositif coopérant avec un deuxième système, ledit procédé comprenant :

-     une phase d'initialisation comprenant :

  ○ détermination d'un point générateur provisoire G' égal à un premier produit tel que $G'=[d']G$, où d'est un premier scalaire aléatoire formant une première clé secrète de N bits et G est un point générateur d'une courbe elliptique ; et
  ○ détermination d'une clé provisoire Q' égale à un deuxième produit tel que $Q'=[d']Q$, où Q est un point de la courbe elliptique formant une clé publique associée au deuxième système ; et

-     une phase de chiffrement comprenant :

  ○ détermination d'un deuxième scalaire aléatoire formant une deuxième clé secrète k de M bits, avec M < N ;
  ○ calcul d'une clé publique P associée au dispositif, P étant égale à un troisième produit tel que $P=[k]G'$ ;
  ○ calcul d'au moins une coordonnée d'un point intermédiaire SP1, de la courbe elliptique, égal à un quatrième produit tel que $SP1=[k]Q'$ ;
  ○ dérivation d'au moins une clé par application d'une fonction de dérivation de clé à ladite au moins une coordonnée du point intermédiaire SP1 ;
  ○ chiffrement de données à partir de ladite au moins une clé dérivée lors de ladite dérivation, de sorte à obtenir des données chiffrées ; et
  ○ envoi au deuxième système de la clé publique P et des données chiffrées pour déchiffrement par le deuxième système.

L'invention met ainsi en œuvre un premier traitement cryptographique basé sur les courbes elliptiques (par exemple de type Diffie-Hellman) qui permet de générer un secret partagé (ou secret commun) pour chiffrer de façon sécurisée des données, en assurant un bon compromis entre le niveau de sécurité atteint et le coût requis en ressources et temps de traitement. Pour ce faire, le point générateur G et la clé publique Q utilisées pour calculer respectivement la clé publique P et le point intermédiaire SP1 (ou au moins une coordonnée de SP1) sont remplacés respectivement par un point générateur provisoire G' et une clé provisoire Q' obtenus lors de la phase d'initialisation, ces paramètres G' et Q' dépendant tous deux d'une même clé secrète d' codée sur N bits.

Un haut niveau de sécurité est ainsi assuré grâce notamment à l'usage d'une première clé secrète d', codée sur un nombre N de bits, pour déterminer le point générateur provisoire G' et la clé publique provisoire Q'. Le point générateur provisoire G' et la clé publique provisoire Q' interviennent eux-mêmes dans le calcul de la clé publique P et de la coordonnée du point intermédiaire SP1 lors de la phase de chiffrement, ce qui permet de renforcer la sécurité de ces calculs. Ainsi, les valeurs de la clé publique P et de la coordonnée dépendent non seulement de la deuxième clé secrète k (codée sur M bits) mais également de la première clé secrète d' (codée sur N bits).

En outre, il est possible de limiter les ressources nécessaires au niveau du dispositif pour déterminer la clé publique P et la coordonnée, ou du moins d'améliorer la gestion de ces ressources, en décomposant les calculs de ces deux éléments en deux phases. Lors de la phase d'initialisation, le dispositif peut obtenir le point générateur provisoire G' et/ou la clé provisoire Q' depuis l'extérieur ou les déterminer par calcul à un moment opportun, par exemple en amont de la phase de chiffrement, par exemple pendant une période d'inactivité ou tout du moins lorsque les ressources nécessaires sont disponibles. Il est ainsi possible d'accélérer la vitesse du chiffrement des données en déterminant à l'avance, lors d'une phase d'initialisation, le point générateur provisoire G' et la clé provisoire Q' pour un usage immédiat lorsque la phase de chiffrement est déclenchée, et ce quelle que soient les données à chiffrer.

L'invention permet de réaliser les calculs cryptographiques les plus coûteux en temps et en ressources lors de la phase d'initialisation avant d'initier la phase de chiffrement. La première clé secrète d' étant codée sur plus de bits que la second clé secrète k, la phase d'initialisation concentre les calculs les plus coûteux. Les opérations de calcul lors de la phase de chiffrement sont donc moins coûteuses dans la mesure où k intervenant dans les troisième et quatrième produits est de résolution moindre.

Selon un mode de réalisation, lors de la phase d'initialisation, le point générateur provisoire G' et la clé provisoire Q' sont reçus depuis l'extérieur du dispositif. Le point générateur provisoire G' et la clé provisoire Q' peuvent alors être enregistrés par le dispositif, par exemple dans une mémoire non volatile du dispositif, de sorte à pouvoir être récupérés et utilisés ultérieurement lors de la phase de chiffrement. Selon ce mode de réalisation, le dispositif n'a donc pas besoin de calculer le point générateur G' et la clé provisoire Q'.

Selon un exemple particulier, le procédé comprend une étape d'obtention des données à chiffrer (avant l'étape de chiffrement desdites données). Ces données peuvent être reçues ou déterminées d'une quelconque manière. Selon un exemple particulier, la détermination de la clé secrète k, le calcul de la clé publique P et le calcul d'au moins une coordonnée d'un point intermédiaire SP1, voire même ladite dérivation d'au moins une clé, sont réalisés à l'avance, c'est-à-dire avant l'étape d'obtention des données à chiffrer.

Selon un mode de réalisation, la clé publique P permet au deuxième système de recalculer ladite au moins une coordonnée du point intermédiaire SP1 à partir d'un scalaire formant une clé secrète - notée a - du deuxième système, où SP1=[a]P, et dans lequel ladite au moins une coordonnée du point intermédiaire SP1 permet au deuxième système de déchiffrer les données chiffrées.

Selon un mode de réalisation, N = 256 bits et M = 32 bits, 48 bits, 64 bits ou 128 bits.

Selon un mode de réalisation, la phase d'initialisation comprend :

- détermination du premier scalaire aléatoire formant ladite première clé secrète d'de N bits ;
- calcul du point générateur provisoire G' égal au premier produit tel que G'=[d']G ; et
- calcul de la clé provisoire Q' égale au deuxième produit tel que Q'=[d']Q.

Selon un mode de réalisation, suite à la phase d'initialisation, le procédé comprend un enregistrement du générateur provisoire G' et de la clé provisoire Q' dans une mémoire non volatile dudit dispositif.

Selon un mode de réalisation, la phase de chiffrement est déclenchée sur détection d'au moins un événement, ladite phase d'initialisation étant réalisée avant ladite détection.

Selon un mode de réalisation, lors de ladite dérivation d'au moins une clé, l'application de la fonction de dérivation de clé à ladite au moins une coordonnée du point intermédiaire SP1 produit une clé de chiffrement, un vecteur d'initialisation et une clé MAC ;

dans lequel ledit chiffrement comprend :

- application d'une fonction de chiffrement pour chiffrer lesdites données à partir de la clé de chiffrement et du vecteur d'initialisation ; et
- calcul d'un code d'authentification MAC à partir des données chiffrées et de la clé MAC ;

dans lequel, outre la clé publique P et les données chiffrées, le dispositif envoie au deuxième système le code d'authentification MAC (MC1) pour permettre au deuxième système de vérifier l'intégrité des données chiffrées.

Selon un mode de réalisation, le dispositif réalise au moins deux itérations successives de la phase de chiffrement, à partir dudit point générateur provisoire G' et de ladite clé provisoire Q' déterminés lors de la phase d'initialisation, pour chiffrer des données qui sont envoyées au deuxième système pour déchiffrement.

En d'autres termes, il est possible de réaliser une pluralité d'itérations de la phase de chiffrement en utilisant le même point générateur provisoire G' et la même clé provisoire Q' déterminées lors de la phase d'initialisation, ce qui permet de réduire encore les coûts requis en ressources et en temps de traitement pour réaliser des chiffrements de données. L'invention permet ainsi d'accélérer encore plus le traitement réalisé par le dispositif puisqu'il n'est pas nécessaire de réaliser la phase d'initialisation avant chaque phase de chiffrement.

Selon un mode de réalisation, pour au moins une itération de la phase de chiffrement, le générateur provisoire G' et la clé provisoire Q' utilisées lors de l'itération courante son égaux respectivement à la clé publique P et au point intermédiaire SP1 qui ont été calculés lors de la précédente itération de la phase de chiffrement.

Selon un mode de réalisation, le procédé comprend en outre, sur détection que le dispositif a réalisé, à partir dudit point générateur provisoire G' et de ladite clé provisoire Q' déterminés lors de la phase d'initialisation, au moins X itérations successives de la phase de chiffrement pour envoyer des données chiffrées au deuxième système, X étant un entier tel que $X \geq 1$ :

- réalisation d'une nouvelle itération de la phase d'initialisation pour renouveler le générateur provisoire G' et la clé provisoire Q' à partir d'une nouvelle première clé aléatoire secrète d' différente de la première clé aléatoire déterminée lors de la précédente itération de la phase d'initialisation ;

le générateur provisoire G' renouvelé et la clé provisoire Q' renouvelée étant utilisés lors d'au moins une itération ultérieure de la phase de chiffrement pour envoyer de nouvelles données chiffrées au deuxième système.

Le dispositif peut ainsi renouveler périodiquement les paramètres G' et Q' pour renforcer la sécurité tout en maintenant de bonnes performances de traitement, par exemple pour authentifier plusieurs fois le dispositif auprès du réseau. En particulier, le renouvellement régulier des paramètres G' et Q' (et donc de la première clé secrète d') permet d'empêcher un tiers malveillant de tracer le dispositif au cours du temps lorsque celui-ci s'enregistre en tant que module d'identité de souscripteur embarqué auprès d'un réseau de télécommunications. Il est en effet difficile pour un tiers de tracer un utilisateur à partir des clés publique P échangées pendant diverses itérations de la phase de chiffrement ou du procédé, car ces clés ne sont pas différenciées uniquement par la clé secrète k mais par cette clé secrète k et par le point générateur provisoire G'.

Selon un mode de réalisation, le premier procédé est tel que :

- le deuxième système est un réseau de télécommunications ;
- le dispositif est un module d'identité de souscripteur embarqué d'un terminal pour authentifier ledit terminal auprès du réseau de télécommunications ;
- les données comprennent un identifiant du module d'identité de souscripteur embarqué ;
- lors dudit chiffrement, l'identifiant est chiffré à partir de ladite au moins une clé dérivée lors de ladite dérivation, de sorte à obtenir un identifiant chiffré ; et
- lors dudit envoi, la clé publique P et l'identifiant chiffré sont envoyés à un point d'accès du réseau de télécommunications pour permettre audit module d'identité de souscripteur embarqué de s'authentifier auprès dudit réseau de télécommunications.

Selon un mode de réalisation, la phase de chiffrement est déclenchée sur détection d'au moins un événement, ladite phase d'initialisation étant réalisée avant ladite détection,
ledit au moins un évènement comprenant la réception, depuis le point d'accès du réseau de télécommunications, d'une requête d'enregistrement du module d'identité de souscripteur embarqué auprès dudit réseau de télécommunications.

Selon un mode de réalisation, le réseau de télécommunications est un réseau mobile 5G et l'identifiant du module d'identité de souscripteur embarqué est un identifiant SUPI.

L'invention permet ainsi en particulier d'améliorer les traitements cryptographiques réalisés par un module d'identité de souscripteur embarqué pour chiffrer l'identifiant SUPI d'un souscripteur, tout en assurant un bon compromis entre le niveau de sécurisation atteinte et le coût requis en ressources et en temps de traitement.

Dans un mode particulier de réalisation, les différentes étapes du premier procédé de traitement cryptographique sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif de traitement cryptographique ou plus généralement dans un ordinateur (ou un quelconque dispositif comprenant un processeur, tel qu'un module d'identité de souscripteur embarqué par exemple), ce programme comportant des instructions adaptées à la mise en œuvre des étapes d'un premier procédé de traitement cryptographique tel que défini dans ce document.

L'invention vise aussi un support d'enregistrement (ou support d'informations) lisible par un ordinateur, et comportant des instructions d'un programme d'ordinateur tel que mentionné ci-dessus.

La présente invention vise également un premier dispositif de traitement cryptographique correspondant, configuré pour mettre en œuvre le premier procédé de traitement cryptographique de l'invention.

L'invention concerne en particulier un dispositif de traitement cryptographique apte à coopérer avec un deuxième système, comprenant :

- un module d'initialisation configuré pour réaliser une phase d'initialisation comprenant :

  ○ détermination d'un point générateur provisoire G' égal à un premier produit tel que G'=[d']G, où d'est un premier scalaire aléatoire formant une première clé secrète de N bits et G est un point générateur d'une courbe elliptique ; et
  ○ détermination d'une clé provisoire Q' égale à un deuxième produit tel que Q'=[d']Q, où Q est un point de la courbe elliptique formant une clé publique associée au deuxième système ; et

- un module de chiffrement configuré pour réaliser une phase de chiffrement comprenant :

  ○ détermination d'un deuxième scalaire aléatoire formant une deuxième clé secrète k de M bits, avec M < N ;
  ○ calcul d'une clé publique P associée au dispositif, P étant égale à un troisième produit tel que P=[k]G' ;
  ○ calcul d'au moins une coordonnée d'un point intermédiaire SP1, de la courbe elliptique, égal à un quatrième produit tel que SP1=[k]Q' ;
  ○ dérivation d'au moins une clé par application d'une fonction de dérivation de clé à ladite au moins une coordonnée du point intermédiaire SP1 ;
  ○ chiffrement de données à partir de ladite au moins une clé dérivée lors de ladite dérivation, de sorte à obtenir des données chiffrées ; et
  ○ envoi au deuxième système de la clé publique P et des données chiffrées pour déchiffrement par le deuxième système.

Selon un mode de réalisation particulier, le premier dispositif comprend une mémoire configurée pour mémoriser le générateur provisoire G' et la clé provisoire Q' déterminés par le module d'initialisation.

A noter que les différents modes de réalisation mentionnés ci-avant (ainsi que ceux décrits ci-après) en relation avec le premier procédé de traitement cryptographique de l'invention ainsi que les avantages associés s'appliquent de façon analogue au premier dispositif de traitement cryptographique de l'invention.

Pour chaque étape du premier procédé de traitement cryptographique, le premier dispositif de traitement cryptographique de l'invention peut comprendre un module correspondant configuré pour réaliser ladite étape.

L'invention s'applique aussi de façon analogue au déchiffrement de données chiffrées. L'invention vise en particulier un deuxième procédé de traitement cryptographique, mis en œuvre par un deuxième dispositif de traitement cryptographique, qui permet le déchiffrement de données chiffrées sur la base d'un principe analogue au premier procédé défini ci-avant (et décrit ci-après).

L'invention vise en particulier un deuxième procédé de traitement cryptographique mis en œuvre par un dispositif coopérant avec un deuxième système, ledit procédé comprenant :

- une phase d'initialisation comprenant :

  ○ détermination d'un point générateur provisoire G' égal à un premier produit tel que G'=[d']G, où d'est un premier scalaire aléatoire formant une première clé secrète de N bits et G est un point générateur d'une courbe elliptique ; et
  ○ détermination d'une clé provisoire Q' égale à un deuxième produit tel que Q'=[d']Q, où Q est un point de la courbe elliptique formant une clé publique associée au deuxième système ; et

- une phase de déchiffrement comprenant :

  ○ détermination d'un deuxième scalaire aléatoire formant une deuxième clé secrète k de M bits, avec M < N ;
  ○ calcul d'une clé publique P associée au dispositif, P étant égale à un troisième produit tel que P=[k]G' ;
  ○ envoi de la clé publique P à un deuxième système ;
  ○ réception, en provenance du deuxième système, de données chiffrées ;
  ○ calcul d'au moins une coordonnée d'un point intermédiaire SP1, de la courbe elliptique, égal à un quatrième produit tel que SP1=[k]Q' ;
  ○ dérivation d'au moins une clé par application d'une fonction de dérivation de clé à ladite au moins une coordonnée du point intermédiaire SP1 ; et

∘ déchiffrement des données chiffrées à partir de ladite au moins une clé dérivée lors de ladite dérivation, de sorte à obtenir des données déchiffrées.

A noter que les différents modes de réalisation mentionnés ci-avant (ainsi que ceux décrits ci-après) en relation avec le premier procédé de traitement cryptographique de l'invention ainsi que les avantages associés s'appliquent de façon analogue au deuxième procédé de traitement cryptographique de l'invention.

Plus spécifiquement, selon un mode de réalisation, lors de la phase d'initialisation, le point générateur provisoire G' et la clé provisoire Q' sont reçus depuis l'extérieur du dispositif. Le point générateur provisoire G' et la clé provisoire Q' peuvent alors être enregistrés par le dispositif, par exemple dans une mémoire non volatile du dispositif, de sorte à pouvoir être récupérés et utilisés ultérieurement lors de la phase de chiffrement. Selon ce mode de réalisation, le dispositif n'a donc pas besoin de calculer le point générateur G' et la clé provisoire Q'.

Selon un exemple particulier, le calcul d'au moins une coordonnée d'un point intermédiaire SP1, voire même ladite dérivation d'au moins une clé, sont réalisés à l'avance, c'est-à-dire avant l'étape de réception de données chiffrées.

Selon un mode de réalisation particulier, la clé publique P permet au deuxième système de calculer ladite au moins une coordonnée du point intermédiaire SP1 à partir d'un scalaire formant une clé secrète - notée a - du deuxième système, où SP1=[a]P, et

dans lequel ladite au moins une coordonnée du point intermédiaire SP1 permet au deuxième système de chiffrer des données de sorte à obtenir les données chiffrées.

Selon un mode de réalisation particulier, N = 256 bits et M = 32 bits, 48 bits, 64 bits ou 128 bits.

Selon un mode de réalisation particulier, la phase d'initialisation comprend :

- détermination du premier scalaire aléatoire formant ladite première clé secrète d'de N bits ;
- calcul du point générateur provisoire G' égal au premier produit tel que G'=[d']G ; et
- calcul de la clé provisoire Q' égale au deuxième produit tel que Q'=[d']Q.

Selon un mode de réalisation particulier, suite à la phase d'initialisation, le procédé comprend un enregistrement du générateur provisoire G' et de la clé provisoire Q' dans une mémoire non volatile du dispositif.

Selon un mode de réalisation particulier, la phase de déchiffrement est déclenchée sur détection d'au moins un événement, ladite phase d'initialisation étant réalisée avant ladite détection.

Selon un mode de réalisation particulier, lors de ladite dérivation d'au moins une clé, l'application de la fonction de dérivation de clé à ladite au moins une coordonnée du point intermédiaire SP1 produit une clé de déchiffrement, un vecteur d'initialisation et une clé MAC ;

dans lequel ledit déchiffrement comprend :

- application d'une fonction de déchiffrement pour déchiffrer lesdites données chiffrées à partir de la clé de déchiffrement et du vecteur d'initialisation ; et
- calcul d'un code d'authentification MAC à partir des données chiffrées et de la clé MAC, pour vérifier l'intégrité des données chiffrées reçues.

Selon un mode de réalisation particulier, le dispositif réalise au moins deux itérations successives de la phase de déchiffrement, à partir dudit point générateur provisoire G' et de ladite clé provisoire Q' déterminés lors de la phase d'initialisation, pour déchiffrer lesdites données chiffrées reçues en provenance dudit deuxième système.

Selon un mode de réalisation particulier, pour au moins une itération de la phase de déchiffrement, le générateur provisoire G' et la clé provisoire Q' utilisées lors de l'itération courante son égaux respectivement à la clé publique P et au point intermédiaire SP1 qui ont été calculés lors de la précédente itération de la phase de déchiffrement.

Selon un mode de réalisation particulier, le procédé comprend en outre, sur détection que le dispositif a réalisé, à partir dudit point générateur provisoire G' et de ladite clé provisoire Q' déterminés lors de la phase d'initialisation, au moins X itérations successives de la phase de déchiffrement pour déchiffrer des données chiffrées reçues du deuxième système, X étant un entier tel que X ≥ 1 :

- réalisation d'une nouvelle itération de la phase d'initialisation pour renouveler le générateur provisoire G' et la clé provisoire Q' à partir d'une nouvelle première clé aléatoire secrète d' différente de la première clé aléatoire déterminée lors de la précédente itération de la phase d'initialisation ;
- le générateur provisoire G' renouvelé et la clé provisoire Q' renouvelée étant utilisés lors d'au moins une itération ultérieure de la phase de déchiffrement pour déchiffrer de nouvelles données chiffrées reçues du deuxième système.

En conséquence, l'invention vise aussi un programme d'ordinateur sur un support d'informations (ou support d'enregistrement), ce programme étant susceptible d'être mis en œuvre dans un dispositif de traitement cryptographique ou plus généralement dans un ordinateur (ou un quelconque dispositif comprenant un processeur, tel qu'un module d'identité de souscripteur embarqué par exemple), ce programme comportant des instructions adaptées à la mise en œuvre des étapes d'un deuxième procédé de traitement cryptographique tel que défini dans ce document.

L'invention vise aussi un support d'enregistrement (ou support d'informations) lisible par un ordinateur, et comportant des instructions d'un programme d'ordinateur tel que mentionné ci-dessus.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un module d'identité de souscripteur embarqué, et plus généralement par un ordinateur, et comportant des instructions d'un programme d'ordinateur tel que défini dans ce document.

De plus, les supports d'enregistrement mentionnés dans le présent exposé peuvent être n'importe quelle entité ou dispositif capable de stocker le programme. Par exemple, le support peut comporter un moyen de stockage, tel qu'une mémoire non volatile réinscriptible ou ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

La présente invention vise également un deuxième dispositif de traitement cryptographique correspondant, configuré pour mettre en œuvre le deuxième procédé de traitement cryptographique de l'invention.

L'invention concerne en particulier un dispositif de traitement cryptographique apte à coopérer avec un deuxième système, comprenant :

- un module d'initialisation configuré pour réaliser une phase d'initialisation comprenant :

  ◦ détermination d'un point générateur provisoire G' égal à un premier produit tel que G'=[d']G, où d' est un premier scalaire aléatoire formant une première clé secrète de N bits et G est un point générateur d'une courbe elliptique ; et

  ◦ détermination d'une clé provisoire Q' égale à un deuxième produit tel que Q'=[d']Q, où Q est un point de la courbe elliptique formant une clé publique associée au deuxième système ; et

- un module de déchiffrement configuré pour réaliser une phase de déchiffrement comprenant :

  ◦ détermination d'un deuxième scalaire aléatoire formant une deuxième clé secrète k de M bits, avec M < N ;
  ◦ calcul d'une clé publique P associée au dispositif, P étant égale à un troisième produit tel que P=[k]G' ;
  ◦ envoi de la clé publique P à un deuxième système ;
  ◦ réception, en provenance du deuxième système, de données chiffrées ;
  ◦ calcul d'au moins une coordonnée d'un point intermédiaire SP1, de la courbe elliptique, égal à un quatrième produit tel que SP1=[k]Q' ;
  ◦ dérivation d'au moins une clé par application d'une fonction de dérivation de clé à ladite au moins une coordonnée du point intermédiaire SP1 ; et
  ◦ déchiffrement des données chiffrées à partir de ladite au moins une clé dérivée lors de ladite dérivation, de sorte à obtenir des données déchiffrées.

Selon un mode de réalisation particulier, le deuxième dispositif comprend une mémoire configurée pour mémoriser le générateur provisoire G' et la clé provisoire Q' déterminés par le module d'initialisation.

A noter que les différents modes de réalisation mentionnés ci-avant (ainsi que ceux décrits ci-après) en relation avec le deuxième procédé de traitement cryptographique de l'invention ainsi que les avantages associés s'appliquent de façon analogue au deuxième dispositif de traitement cryptographique de l'invention.

Pour chaque étape du deuxième procédé de traitement cryptographique, le deuxième dispositif de traitement cryptographique de l'invention peut comprendre un module correspondant configuré pour réaliser ladite étape.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. De la même manière, un composant matériel correspond à tout élément d'un ensemble matériel (ou hardware) apte à mettre en œuvre une fonction ou un ensemble de fonctions, selon ce qui est décrit dans ce document pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

[Fig. 1] La figure 1 est un diagramme représentant schématiquement un processus conventionnel d'authentification d'un terminal de télécommunications auprès d'un réseau 5G ;

[Fig. 2] La figure 2 est un diagramme représentant schématiquement un processus conventionnel de renouvellement de l'authentification d'un terminal de télécommunications auprès d'un réseau 5G ;

[Fig. 3] La figure 3 représente, sous forme d'un diagramme, les étapes d'un procédé de chiffrement d'un identifiant de souscripteur pour s'authentifier auprès d'un réseau 5G ;

[Fig. 4] La figure 4 représente, sous forme d'un diagramme, les étapes d'un procédé de déchiffrement d'un identifiant de souscripteur réalisée par un réseau 5G ;

[Fig. 5] La figure 5 représente un dispositif de traitement cryptographique permettant d'authentifier le terminal de télécommunications d'utilisateur auprès d'un réseau de télécommunications, conformément à un mode de réalisation particulier de l'invention ;

[Fig. 6] La figure 6 représente des modules fonctionnels mis en œuvre par un dispositif de traitement cryptographique, selon un mode de réalisation particulier de l'invention ;

[Fig. 7] La figure 7 représente, sous forme d'un diagramme, les étapes d'un procédé cryptographique mis en œuvre par un dispositif de traitement cryptographique, selon un mode de réalisation particulier de l'invention ;

[Fig. 8] La figure 8 représente, sous forme d'un diagramme, les étapes d'un procédé cryptographique mis en œuvre par un réseau de télécommunications, selon un mode de réalisation particulier de l'invention ;

[Fig. 9] La figure 9 représente, sous forme d'un diagramme, les étapes d'un procédé cryptographique mis en œuvre par un dispositif de traitement cryptographique, selon un mode de réalisation particulier de l'invention ;

[Fig. 10] La figure 10 représente, sous forme d'un diagramme, les étapes d'un procédé cryptographique mis en œuvre par un dispositif de traitement cryptographique, selon un mode de réalisation particulier de l'invention ; et

[Fig. 11] La figure 11 représente, sous forme d'un diagramme, les étapes d'un procédé cryptographique mis en œuvre par un dispositif de traitement cryptographique, selon un mode de réalisation particulier de l'invention.

Description des modes de réalisation

L'invention se propose de mettre en œuvre des traitements cryptographiques pour chiffrer ou déchiffrer des données tout en assurant un bon compromis entre niveau de sécurité et coûts de traitement. L'invention vise notamment, mais pas exclusivement, à chiffrer des identifiants de souscripteur pour authentifier un utilisateur auprès d'un réseau de télécommunications (par exemple pour chiffrer un identifiant SUPI en vue de s'authentifier auprès d'un réseau 5G). Toutefois, l'invention permet plus généralement de chiffrer ou déchiffrer de quelconques données, que ce soient des identifiants de souscripteur à des réseaux de télécommunications, ou toutes autres données appropriées.
En particulier, l'invention permet d'établir un secret commun (ou secret partagé) en vue, soit de transmettre des données chiffrées depuis un dispositif vers une entité tierce, soit de déchiffrer des données chiffrées reçues sous forme chiffrée.

L'invention prévoit ainsi notamment un procédé de traitement cryptographique mis en œuvre par un dispositif de traitement cryptographique (dit aussi « dispositif » ou « dispositif de traitement » par la suite). Ce procédé comprend une phase d'initialisation au cours de laquelle le dispositif détermine un point générateur provisoire G' d'une courbe elliptique et une clé provisoire Q', et une phase de chiffrement au cours de laquelle le dispositif détermine une clé publique P à partir du point générateur G' et chiffre des données à partir de la clé provisoire Q'. Le dispositif peut ainsi envoyer les données chiffrées ainsi que la clé publique P à un système, dit « deuxième système ».

L'invention prévoit plus particulièrement, selon ses différents modes de réalisation, un procédé de traitement cryptographique mis en œuvre par un dispositif coopérant avec un deuxième système, ledit procédé comprenant :

- une phase d'initialisation comprenant :

  ◦ détermination d'un point générateur provisoire G' égal à un premier produit tel que G'=[d']G, où d' est un premier scalaire aléatoire formant une première clé secrète de N bits et G est un point générateur d'une courbe elliptique ; et

  ◦ détermination d'une clé provisoire Q' égale à un deuxième produit tel que Q'=[d']Q, où Q est un point de la courbe elliptique formant une clé publique associée au deuxième système ; et

- une phase de chiffrement comprenant :

  ◦ détermination d'un deuxième scalaire aléatoire formant une deuxième clé secrète k de M bits, avec M < N ;

  ◦ calcul d'une clé publique P associée au dispositif, P étant égale à un troisième produit tel que P=[k]G' ;

  ◦ calcul d'au moins une coordonnée d'un point intermédiaire SP1, de la courbe elliptique, ce point intermédiaire SP1 étant égal à un quatrième produit tel que SP1 =[k]Q' ;

  ◦ dérivation d'au moins une clé par application d'une fonction de dérivation de clé à ladite au moins une coordonnée du point intermédiaire SP1 ;

  ◦ chiffrement de données à partir de ladite au moins une clé dérivée lors de ladite dérivation, de sorte à obtenir des données chiffrées ; et

  ◦ envoi au deuxième système de la clé publique P et des données chiffrées pour déchiffrement par le deuxième système.

L'invention vise également un dispositif correspondant et un programme d'ordinateur correspondant.

L'invention vise également un procédé pour déchiffrer des données chiffrées, qui s'appuie sur un principe analogue à celui du procédé de traitement cryptographique de l'invention. L'invention vise en outre un dispositif correspondant et un programme d'ordinateur correspondant.

D'autres aspects et avantages de la présente invention ressortiront des exemples de réalisation décrits ci-dessous en référence aux dessins mentionnés ci-avant.

Dans ce document, des exemples de mise en œuvre de l'invention sont décrits dans le contexte d'un module d'identité de souscripteur embarqué configuré pour authentifier l'utilisateur d'un terminal de télécommunications auprès d'un réseau de télécommunications de type 5G. Pour ce faire, le module d'identité de souscripteur embarqué (par exemple une carte SIM ou un module eSIM) effectue un traitement cryptographique pour chiffrer un identifiant SUPI d'un utilisateur.

Un identifiant SUPI peut se présenter sous la forme d'une chaîne de chiffres décimaux (de 15 chiffres par exemple), diverses implémentations étant toutefois possibles. Selon un exemple particulier, un identifiant SUPI comprend successivement :

- 3 chiffres représentant le "Mobile Country Code" (MCC);

- 2 ou 3 autres chiffres formant le "Mobile Network Code" (MNC) identifiant l'opérateur réseau ;

- les chiffres restant (9 ou 10) formant un identifiant MSIN (pour « Subscriber Identification Number ») qui représente l'utilisateur de l'opérateur réseau.

A noter toutefois que l'invention ne se limite pas à cet exemple particulier et s'applique plus généralement au chiffrement ou déchiffrement de données quelconques par un dispositif de traitement cryptographique de l'invention. Les données à chiffrer (ou à déchiffrer) peuvent être ou comprendre un identifiant d'un souscripteur à un réseau de télécommunications (de type 5G ou autre) ou toutes autres données, telles que des données personnelles ou données à caractère sensible par exemple. L'invention s'applique aussi au chiffrement ou déchiffrement de données dans des contextes autres que celui d'une authentification auprès d'un réseau de télécommunications.

A noter qu'un module d'identité de souscripteur embarqué dans un terminal de télécommunications peut prendre plusieurs formes, et en particulier divers facteurs de forme (formats). Ainsi, un module d'identité de souscripteur embarqué peut se présenter sous la forme d'une carte SIM (ou UICC pour « Universal Integrated Circuit Card ») ou d'une carte eSIM, aussi appelée eUICC. Un autre exemple d'élément sécurisé est un élément sécurisé embarqué dit eSE (pour « embedded Secure Element), qui est généralement soudé au terminal hôte. Les principes de l'invention sont donc applicables aux différents types d'éléments sécurisés (par exemple, carte SIM, eSIM, eUICC, SE, eSE ou combinaison d'éléments sécurisés).

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

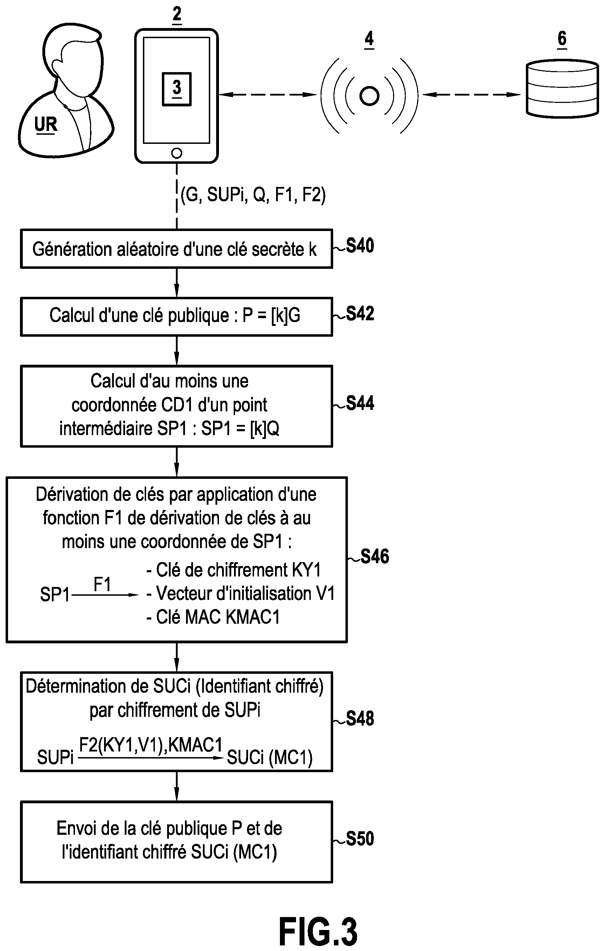

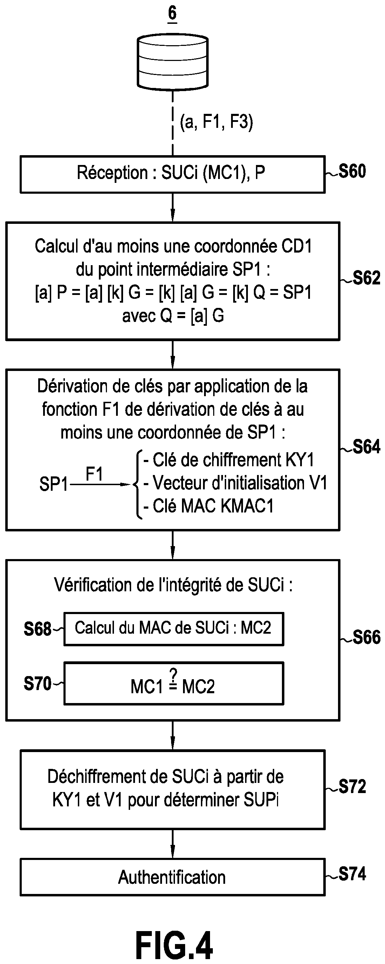

Pour faciliter la compréhension de l'invention décrite ci-après dans des modes de réalisation particuliers, un procédé de chiffrement d'un identifiant SUPI et un procédé de déchiffrement d'un identifiant SUCI sont décrits ci-dessous en référence aux **figures 3** et **4,** selon un exemple particulier ne mettant pas en œuvre le concept de l'invention. Ces exemples particuliers s'inscrivent dans l'authentification d'un souscripteur auprès d'un réseau 5G.

Plus précisément, comme illustré en **figure 3,** on suppose qu'un terminal de télécommunications 2 embarque un module d'identité de souscripteur 3 prenant par exemple la forme d'une carte SIM. Cette carte SIM 3 permet notamment d'authentifier l'utilisateur UR auprès d'un réseau de télécommunications 5G noté 6, via un point d'accès 4 dudit réseau. Pour ce faire, la carte SIM 3 comprend des moyens pour réaliser des opérations de traitement cryptographiques à partir d'une courbe elliptique ε choisie au cas par cas par l'homme du métier. La carte SIM 3 comprend notamment en mémoire un point générateur G de la courbe elliptique ε, une clé publique Q du réseau 6, un identifiant SUPI, une fonction F1 de dérivation de clé et une fonction F2 de chiffrement.

Au cours d'une étape S40 de génération, la carte SIM 3 génère aléatoirement un scalaire formant une clé secrète k. On suppose que cette clé k est codée sur M bits, où M est égal à 256. La carte SIM 3 calcule (S42) ensuite une clé publique P qui lui est associée, à partir de la clé secrète k et du point générateur G. Pour ce faire, la carte SIM 3 calcule (S42) le produit de k avec G tel que :

$$[\text{Math. 1}] \quad P = [k]G$$

A noter que, dans tout le présent document, cette notation indique un produit (ou une multiplication) d'un point de la courbe elliptique (représenté sans croché) par un scalaire (représenté entre « [] »). Selon une notation équivalente (et interchangeable dans tout le présent document), la clé publique P est donc aussi telle que :

$$[\text{Math. 2}] \quad P = k \cdot G$$

La carte SIM 3 calcule (S44) ensuite au moins une coordonnée CD1 (coordonnée suivant la direction x et/ou suivant la direction y par exemple) d'un point SP1 - dit point intermédiaire - de la courbe elliptique ε. Ce point intermédiaire SP1 est égal au produit de la clé secrète k par la clé publique Q du réseau 6 :

$$[\text{Math. 3}] \quad SP1 = [k]Q$$

On suppose dans cet exemple que la carte SIM 3 ne détermine qu'une seule coordonnée CD1 (par exemple suivant x ou y) du point intermédiaire SP1.

Au cours d'une étape S46, la carte SIM 3 dérive alors des clés (ou paramètres) en appliquant la fonction F1 de dérivation de clé à la coordonnée CD1 du point intermédiaire SP1. Dans cet exemple, la carte SIM 3 dérive ainsi une clé de chiffrement KY1, un vecteur d'initialisation V1 et, éventuellement aussi une clé MAC (pour « message authentication code ») notée KMAC1.

A titre d'exemple, la fonction F1 peut être la fonction de dérivation prévue dans la norme « ANSI X9.63 Key Derivation Function, §5.6.3 », d'autre fonctions étant possibles.

La carte SIM 3 chiffre ou crypte (S48) ensuite l'identifiant SUPI à partir des clés (ou données) obtenues lors de l'étape S46 de dérivation de sorte à obtenir un identifiant chiffré SUCI, qui équivaut à l'identifiant SUPI sous une forme chiffrée. Plus précisément, la carte SIM 3 détermine l'identifiant chiffré SUCI en chiffrant l'identifiant de souscripteur SUPI (ou une sous-partie de l'identifiant de souscripteur SUPI). Pour ce faire, la carte SIM 3 applique à l'identifiant SUPI (ou à une sous-partie de celui-ci) une fonction de chiffrement F2 en utilisant la clé de chiffrement KY1 et le vecteur d'initialisation V1, de sorte à obtenir l'identifiant chiffré SUCI. En outre, la carte SIM 3 calcule, à partir de la clé KMAC1, un code d'authentification MAC - noté MC1 - de l'identifiant chiffré SUCI, en appliquant par exemple une fonction de calcul de MAC. La fonction de calcul de MAC utilisée peut par exemple être HMAC (FIPS 198-1, Juillet 2008) avec SHA-256 (FIPS 180-4 §6.2, Août 2015).

A titre d'exemple, la fonction F2 peut être la fonction de chiffrement AES (FIPS 197) en mode compteur tel que prévu dans la norme « SP800-38a §6.5 ».

La carte SIM 3 envoie (S50) ensuite au réseau 6, via son point d'accès 4, la clé publique P ainsi que l'identifiant chiffré SUCI accompagné du code d'authentification MAC MC1. La carte SIM 3 envoie par exemple l'identifiant chiffré SUCI dans lequel elle a inséré le code d'authentification MC1. La clé publique P est par exemple intégrée dans l'identifiant chiffré SUCI, bien que d'autres implémentations soient possibles.

La clé publique P permet au réseau 6 de déchiffrer l'identifiant SUCI afin de récupérer l'identifiant SUPI sous sa forme déchiffrée, tandis que le code d'authentification MAC MC1 permet au réseau 6 de vérifier l'intégrité de l'identifiant chiffré SUCI reçu de la carte SIM 3, comme décrit ci-après.

Plus précisément, comme illustré en **figure 4,** le réseau 6 reçoit (S60) en provenance de la carte SIM3, via le point d'accès 4, la clé publique P de la carte SIM, ainsi que l'identifiant chiffré SUCI accompagné du code d'authentification MAC MC1.

Le réseau 6 dispose en mémoire d'une clé secrète - notée a - associée audit réseau 6, de la fonction de dérivation F1 et d'une fonction de déchiffrement F3.

Au cours d'une étape S62 de calcul, le réseau 6 calcule ladite au moins une coordonnée CD1 du point intermédiaire SP1 de la courbe elliptique ε. Dans cet exemple, le réseau 6 calcule donc l'unique coordonnée CD1 (suivant x ou y par exemple) utilisée par la carte SIM 3 pour chiffrer l'identifiant SUPI. Pour ce faire, le réseau 6 détermine la coordonnée CD1 du point intermédiaire SP1. Ce point intermédiaire est égal au produit de la clé secrète a par la clé publique P comme défini ci-dessous :

$$[\text{Math. 4}] \qquad [a]P = [a][k]G = [k][a]G = [k]Q = SP1$$

où la clé publique Q du réseau 6 est égale au produit de la clé secrète a par le point générateur G comme défini ci-dessous :

$$[\text{Math. 5}] \qquad Q = [a]G$$

Comme indiqué ci-avant, le réseau 6 dispose en mémoire de sa clé secrète a. Ainsi, il peut retrouver par calcul la coordonnée CD1 du point intermédiaire SP1 sans avoir connaissance de la clé secrète k.

Comme illustré en **figure 4,** le réseau 6 dérive (S64) ensuite la clé de chiffrement KY1, le vecteur d'initialisation V1 et, le cas échéant, la clé MAC notée KMAC1, en appliquant la fonction F1 de dérivation de clé de façon identique à l'étape S46 de dérivation effectuée au préalable par la carte SIM 3. Pour ce faire, le réseau 6 applique la fonction F1 de dérivation de clé à la coordonnée CD1 du point intermédiaire SP1 obtenue en S62. La clé KY1 fait ici office de clé de déchiffrement pour déchiffrer l'identifiant chiffré SUCI.

Comme déjà indiqué, la fonction F1 peut être par exemple la fonction de dérivation prévue dans la norme « ANSI X9.63 Key Derivation Function, §5.6.3 », d'autre fonctions étant possibles.

Au cours d'une étape S66 de vérification, le réseau 6 vérifie l'intégrité de l'identifiant chiffré SUCI reçue en S60 depuis la carte SIM 3. Pour ce faire, le réseau 6 calcule, à partir de la clé MAC KMAC1 obtenue en S64, un code d'authentification MAC - noté MC2 - de l'identifiant chiffré SUCI fourni par la carte SIM 3. Le réseau 3 compare (S70) ensuite le code d'authentification MC2 calculé en S68 avec le code d'authentification MC1 reçu en S60 depuis la carte SIM 3. Si les codes d'authentification MC1 et MC2 coïncident, le réseau 6 en déduit que l'identifiant chiffré SUCI reçu en S60 est intègre. Dans le cas contraire, l'identifiant chiffré SUCI fourni par la carte SIM 3 n'est pas intègre.

S'il est détecté que l'identifiant chiffré SUCI reçu en S60 est intègre (n'a pas été altéré), le réseau 6 déchiffre (S72) alors l'identifiant chiffré SUCI selon le principe inverse de l'étape de chiffrement S48 réalisée au préalable par la carte SIM 3. Plus particulièrement, le réseau 3 déchiffre ou décrypte (S72) l'identifiant chiffré SUCI (ou une sous-partie de celui-ci) à partir de la clé de déchiffrement KY1 et du vecteur d'initialisation V1 obtenus lors de l'étape S64 de dérivation de sorte à retrouver l'identifiant SUPI dans sa forme déchiffrée. Le réseau 6 applique en particulier à l'identifiant chiffré SUCI (ou à une sous-partie de celui-ci) une fonction de déchiffrement F3 (inverse à la fonction de chiffrement F2 utilisée en S48 par la carte SIM 3) en utilisant la clé de déchiffrement KY1 et le vecteur d'initialisation V1, de sorte à obtenir l'identifiant SUPI.

A titre d'exemple, la fonction F3 peut être la fonction de déchiffrement AES (FIPS 197) en mode compteur tel que prévu dans la norme « SP800-38a §6.5 ».

A partir de l'identifiant SUPI obtenu en S72, le réseau 6 peut alors procéder à l'authentification (S74) du souscripteur, comme déjà décrit ci-avant en référence aux **figures 1** et **2.**

Comme déjà indiqué, les traitements cryptographiques de chiffrage et de déchiffrage réalisés respectivement par la carte SIM 3 et par le réseau 6 permettent à la carte SIM 3 de s'authentifier de façon sécurisée auprès du réseau 6 sans fournir son identifiant SUPI sous sa forme déchiffrée. Ces traitements cryptographiques sont avantageux en ce qu'ils permettent de combattre notamment les interceptions non-autorisée d'identifiants SUPI par des tiers malveillants.

Cependant, une difficulté réside en ce que ces traitements cryptographiques peuvent être particulièrement coûteux en ressource et en temps de traitement, ces coûts n'étant pas toujours compatibles avec les ressources disponibles et les contraintes de temps applicables. Plus particulièrement, le calcul (S42, **figure 3**) de la clé publique P (où P=[k]G) et le calcul (S44) d'au moins une coordonnée CD1 du point intermédiaire SP1 (avec SP1=[k]Q) sont particulièrement consommateurs en ressources et en temps de traitement. La complexité de ces deux calculs résulte en particulier du fait que la clé secrète k est codée sur un nombre relativement important de bits, à savoir 256 bits (M=256), d'autres valeurs de M étant toutefois possibles.

L'invention vise donc notamment à améliorer les traitements cryptographiques réalisés par un module d'identité de souscripteur embarqué pour chiffrer l'identifiant SUPI d'un souscripteur, tout en assurant un bon compromis entre le niveau de sécurisation atteinte et le coût requis en ressources et en temps de traitement. Comme déjà indiqué, l'invention s'applique plus généralement au chiffrement ou déchiffrement efficace et sécurisée de quelconques données, que ce soient des identifiants de souscripteur (SUCI dans le contexte de la 5G ou autre) ou toutes autres données que l'on souhaite protéger et diffuser de façon sécurisée.

Le principe de l'invention est à présent décrit dans des modes de réalisation particuliers.

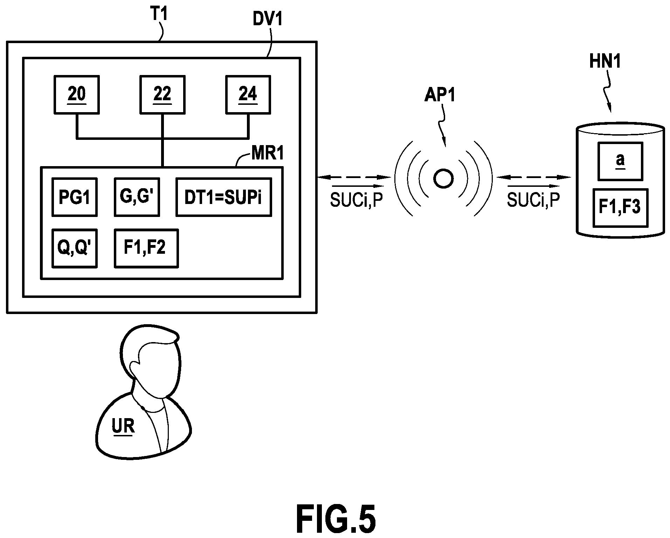

La **figure 5** représente schématiquement un dispositif de traitement cryptographique DV1, appelé aussi plus simplement « dispositif » par la suite, apte à coopérer avec un réseau de télécommunications HN1 via un point d'accès AP1. On suppose ici que le dispositif DV1 est un module d'identité de souscripteur embarqué dans un terminal de télécommunication T1 et que le réseau de télécommunication HN1 est un réseau mobile 5G. Le dispositif DV1 est donc ici destiné en particulier à authentifier un souscripteur auprès du réseau HN1.

Le dispositif DV1 communique avec le réseau HN1 par l'intermédiaire du terminal de télécommunications T1 qui comprend des moyens de communication appropriés.

Le module d'identité de souscripteur DV1 peut prendre diverses formes, telles que par exemple une carte SIM ou une carte eSIM. Le dispositif DV1 peut notamment être une carte amovible ou un dispositif soudé dans le terminal T1. Bien que le dispositif DV1 soit ici embarqué dans le terminal T1, des variantes sont possibles dans lesquelles le dispositif DV1 n'est pas embarqué dans le terminal T1 mais coopère à distance avec celui-ci.

Dans cet exemple, le terminal T1 peut être un quelconque terminal client compatible avec la 5G, tel qu'un téléphone portable (smartphone), une tablette, etc.

Plus précisément, le dispositif DV1 comprend dans cet exemple au moins un processeur 20, une mémoire volatile (RAM) 22, une interface de communication 24 et une mémoire non volatile MR1.

Dans cet exemple, la mémoire MR1 est une mémoire non volatile réinscriptible ou une mémoire morte (ROM ou EEPROM ou FLASH), cette mémoire constituant un support d'enregistrement (ou support d'informations) conforme à un mode de réalisation particulier, lisible par le dispositif DV1, et sur lequel est enregistré un programme d'ordinateur PG1 conforme à un mode de réalisation particulier. Ce programme d'ordinateur PG1 comporte des instructions pour l'exécution des étapes d'un procédé de traitement cryptographique selon un mode de réalisation particulier. Les étapes de ce procédé sont décrites ci-après en détail dans des modes particuliers de réalisation.

La mémoire MR1 est notamment apte à stocker des données DT1 que l'on souhaite chiffrer selon le principe de l'invention. Comme indiqué par la suite, on suppose ici que ces données DT1 sont, ou tout du moins comprennent, un identifiant de souscripteur de type SUPI (ou sous-partie de celui-ci) permettant l'authentification d'un souscripteur auprès d'un réseau 5G. D'autres types d'identifiants de souscripteur sont toutefois possibles. Le principe de l'invention peut s'appliquer pour chiffrer de quelconques données que l'on souhaite protéger. Ces données DT1 peuvent être obtenues (reçues, déterminées, etc.) par le dispositif DV1 d'une quelconque manière.

La mémoire MR1 est en outre apte à stocker des données (ou paramètres) utilisées lors du procédé de traitement cryptographique de l'invention pour chiffrer ces données DT1. Dans l'exemple considéré ici, la mémoire MR1 est en particulier apte à stocker un point générateur G, une clé publique Q associée au réseau HN1, une fonction de dérivation F1 et une fonction de chiffrement F2. La mémoire MR1 peut en outre stocker des données déterminées lors du procédé de traitement cryptographique, notamment un point générateur provisoire G' et une clé provisoire Q'. La nature et l'usage de ces différents paramètres sont décrits plus en détail ultérieurement.

L'interface de communication 24 est configurée pour permettre au dispositif DV1 de coopérer avec le terminal T1 dans lequel il est embarqué. Le dispositif DV1 utilise le terminal T1 pour communiquer avec le réseau distant HN1.

La nature de cette interface 24 peut varier selon le cas.

A noter également que le réseau HN1 comprend en mémoire une clé secrète notée a, la fonction de dérivation F1, ainsi qu'une fonction de déchiffrement F3 correspondant à la fonction inverse de la fonction de chiffrement F2 utilisée par le dispositif DV1 pour chiffrer des données DT1.

On comprendra que certains éléments généralement mis en œuvre dans un terminal de télécommunications 5G et dans un module d'identité de souscripteur embarqué ont été volontairement omis car ils ne sont pas nécessaires à la compréhension de la présente invention.

Il convient également de noter que le dispositif DV1 représenté en **figure 5** ne constitue qu'un exemple de réalisation, d'autres mises en œuvre étant possibles dans le cadre de l'invention. L'homme du métier comprend en particulier que certains éléments du dispositif DV1 ne sont décrits ici que pour faciliter la compréhension de l'invention, ces éléments n'étant pas obligatoires pour mettre en œuvre l'invention.

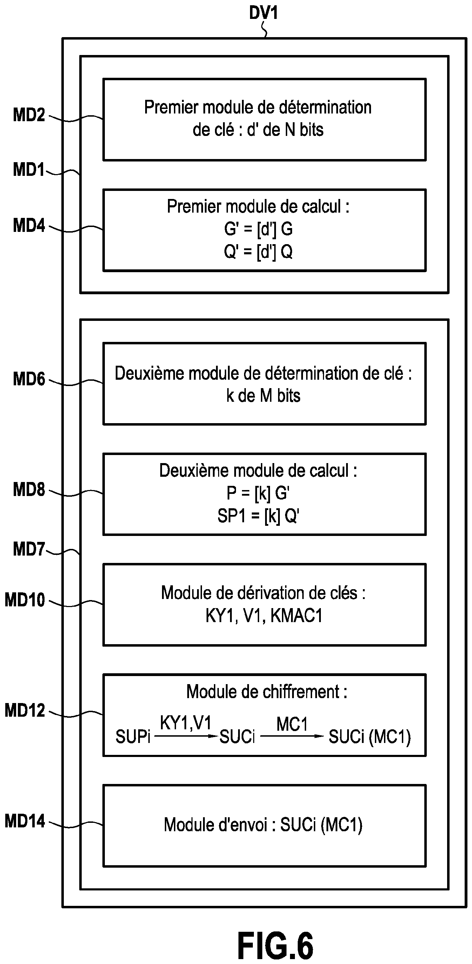

Comme représenté en **figure 6** selon un mode de réalisation particulier, le processeur 20 piloté par le programme d'ordinateur PG1 met ici en œuvre un module d'initialisation MD1 et un module de chiffrement MD7.

Selon un exemple particulier, le module d'initialisation MD1 est configuré pour réaliser une phase d'initialisation comprenant :

- détermination d'un point générateur provisoire G' égal à un premier produit tel que G'=[d']G, où d' est un premier scalaire aléatoire formant une première clé secrète de N bits et G est un point générateur d'une courbe elliptique $\epsilon$ ; et

- détermination d'une clé provisoire Q' égale à un deuxième produit tel que Q'=[d']Q, où Q est un point de la courbe elliptique $\epsilon$ formant une clé publique associée au deuxième système

La courbe elliptique $\epsilon$ utilisée et le nombre entier positif N peuvent être choisis par l'homme du métier au cas par cas selon l'application considérée. La valeur de N peut notamment être choisie selon le niveau de sécurité souhaité et selon les contraintes en coût en ressource et en temps de traitement. Comme indiqué par la suite, N peut être par exemple égal à 256 de sorte que la première clé secrète d' soit codée sur 256 bits (d'autres valeurs étant toutefois possibles).

L'homme du métier peut ainsi adapter la valeur de N au cas par cas. On peut ainsi choisir la taille de N en fonction notamment de la taille de la courbe elliptique $\epsilon$ utilisée (c'est-à-dire la taille de l'ordre du groupe de points engendrés par le point générateur G). Par exemple si on utilise une courbe elliptique $\epsilon$ de 384 bits, le nombre de bits N sera choisi ici comme étant de 384 bits. Ainsi, la valeur de N peut être par exemple choisie parmi l'une des valeurs suivantes : N= 192, 224, 256, 384, 521 ou 512 bits. La valeur de N peut être choisie en fonction de la courbe elliptique $\epsilon$ utilisée (en fonction de sa taille). Etant donné que M est tel que M<N, la valeur de M peut également être choisie en fonction de la courbe elliptique $\epsilon$ utilisée.

Comme décrit par la suite, plusieurs implémentations du module d'initialisation MD1 sont possibles. Le module d'initialisation MD1 peut être configuré pour obtenir ou déterminer le point générateur provisoire G' et la clé provisoire Q' lors de la phase d'initialisation selon toutes méthodes appropriées. Selon un exemple particulier, le module d'initialisation MD1 est configuré pour recevoir le point générateur provisoire G' et la clé provisoire Q' depuis l'extérieur du dispositif DV1. Le point générateur provisoire G' et la clé provisoire Q' peuvent alors être enregistrés dans la mémoire non volatile MR1 de sorte à pouvoir être récupérés et utilisés ultérieurement lors de la phase de chiffrement comme décrit par la suite.

Selon un exemple particulier, le module d'initialisation MD1 détermine G' et Q' par calcul à partir d'un scalaire noté d'. Pour ce faire, le module d'initialisation MD1 peut comprendre par exemple un premier module de détermination MD2 et un premier module de calcul MD4 comme représenté en **figure 6,** d'autres implémentations étant toutefois possibles.

Le premier module de détermination MD2 est configuré pour déterminer un premier scalaire formant une première clé secrète d' de N bits.

Le premier module de calcul MD4 est configuré pour :

- calculer un point générateur provisoire G' égal au premier produit tel que G'=[d']G ; et

- calculer une clé provisoire Q' égale au deuxième produit tel que Q'=[d']Q.

Le résultat obtenu pour G' et Q' peut ensuite être stocké en mémoire dans le dispositif DV1 (dans la mémoire vive 22 ou dans la mémoire non volatile MR1).

Il importe toutefois de rappeler que des modes de réalisation sont possibles sans que le module d'initialisation ne mette en œuvre les modules MD2 et MD4 décrits ci-dessus. Le module d'initialisation MD1 peut obtenir G' et Q' d'une quelconque manière.

Par ailleurs, le module de chiffrement MD7 est configuré pour réaliser une phase de chiffrement comprenant les étapes suivantes :

- détermination d'un deuxième scalaire aléatoire formant une deuxième clé secrète k de M bits, avec M < N ;

- calcul d'une clé publique P associée au dispositif DV1, P étant égale à un troisième produit tel que P=[k]G' ;

- calcul d'au moins une coordonnée CD1 d'un point intermédiaire SP1, de la courbe elliptique ε, ce point intermédiaire SP1 étant égal à un quatrième produit tel que SP1=[k]Q' ;

- dérivation d'au moins une clé par application d'une fonction de dérivation de clé à ladite au moins une coordonnée du point intermédiaire SP1 ;

- chiffrement de données à partir de ladite au moins une clé dérivée lors de ladite dérivation, de sorte à obtenir des données chiffrées ; et

- envoi à un deuxième système de la clé publique P et des données chiffrées pour déchiffrement par le deuxième système.

Le nombre entier positif M peut être choisi par l'homme du métier au cas par cas selon l'application considérée (étant entendu que M < N), et notamment selon le niveau de sécurité souhaité et selon les contraintes de coût en ressources et en temps de traitement. On considère par exemple que M est égal à 32, 48, 64 ou 128 bits et que N est égal à 256 bits (d'autres couples de valeurs (N,M) étant toutefois possibles).

Dans les exemples de réalisation décrits ci-après, on considère que le « deuxième système » au sens de l'invention est le réseau de télécommunications HN1, ou plus généralement le réseau HN1 incluant son point d'accès AP1.

Comme représenté en **figure 6** selon un exemple particulier, le module de chiffrement MD7 peut comprendre un deuxième module de détermination MD6, un deuxième module de calcul MD8, un module MD10 de dérivation de clés, un module de chiffrement MD12 et un module d'envoi MD14, d'autres implémentations étant toutefois possibles.

Plus spécifiquement, le deuxième module de détermination MD6 est configuré pour déterminer un deuxième scalaire aléatoire formant une deuxième clé secrète k de M bits, avec M < N.

Le deuxième module de calcul MD8 est configuré pour calculer :

- une clé publique P associée au dispositif DV1, P étant égale à un troisième produit tel que P=[k]G' ; et
- au moins une coordonnée CD1 d'un point intermédiaire SP1, de la courbe elliptique ε, ce point intermédiaire SP1 étant égal à un quatrième produit tel que SP1=[k]Q'

Le module MD10 de dérivation de clés est configuré pour dériver au moins une clé par application d'une fonction de dérivation de clé à ladite au moins une coordonnée CD1 du point intermédiaire SP1 calculée par le deuxième module de calcul MD8.

Le module MD12 de chiffrement de données est configuré pour chiffrer, à partir de ladite au moins une clé dérivée par le module MD10 de dérivation de clés, de sorte à obtenir des données chiffrées.

Le module d'envoi MD14 est configuré pour envoyer au deuxième système (i.e. au réseau HN1 dans cet exemple) la clé publique P et des données chiffrées pour déchiffrement par le deuxième système.

La configuration et le fonctionnement des modules MD1-MD14 du dispositif DV1 apparaîtront plus précisément dans les exemples de réalisation décrits ci-après. A noter que les modules MD1-MD14 tels que représentés en **figure 6** ne représentent qu'un exemple de mise en œuvre non limitatif de l'invention. De manière générale, pour chaque étape du procédé de traitement cryptographique de l'invention, le dispositif de traitement cryptographique de l'invention peut comprendre un module correspondant configuré pour réaliser ladite étape.

De manière générale, le concept de l'invention réside notamment en ce que le point générateur G utilisé à l'étape S42 (figure 3) pour calculer la clé publique P d'une part, et la clé publique Q utilisée à l'étape S44 (figure 3) pour déterminer au moins une coordonnée CD1 du point intermédiaire SP1 d'autre part, sont remplacés lors de la phase de chiffrement par respectivement un point générateur provisoire G' et une clé provisoire Q' comme mentionnés ci-avant. Le point générateur provisoire G' et la clé provisoire Q' sont tous deux générés à partir d'une clé secrète d' qui est un scalaire aléatoire codé sur un nombre N de bits plus important que le nombre M de bits sur lesquels est codée la clé secrète k utilisée lors de la phase de chiffrement. Il est ainsi possible de garder un niveau de sécurité élevé en choisissant un nombre N relativement élevé (N=256 par exemple) tout en réduisant le coût des calculs réalisés lors de la phase de chiffrement en limitant le nombre M (avec M < N). Comme déjà indiqué, le nombre N (supérieur à M) peut être choisi en fonction de la courbe elliptique ε utilisée. Le nombre N peut par exemple correspondre à la sécurité maximale offerte par la courbe elliptique ε utilisée.

Dans la mesure où la clé secrète k est codée sur un nombre M de bits plus faible que N, la complexité des calculs réalisés pour déterminer la clé publique P et au moins une coordonnée CD1 d'un point intermédiaire SP1 reste modérée, ce qui permet d'assurer un bon compromis entre niveau de sécurité du chiffrement et coût en ressources et temps de traitement. Ce compromis peut être ajusté au cas par cas en adaptant la valeur de N et M à chaque situation.

Comme indiqué par la suite, le point générateur provisoire G' et la clé provisoire Q' peuvent être déterminées lors d'une phase d'initialisation qui précède la phase de chiffrement, ce qui permet avantageusement d'obtenir G' et Q' en amont et ainsi accélérer les traitements cryptographiques lorsque le dispositif de traitement cryptographique engage la phase de chiffrement. En outre, des mêmes valeurs de G' et Q' obtenues lors de la phase d'initialisation peuvent être utilisées à plusieurs reprises (i.e. lors de plusieurs itérations) de la phase de chiffrement, ce qui permet d'accélérer encore le traitement réalisé par le dispositif puisqu'il n'est pas nécessaire de réaliser la phase d'initialisation avant chaque phase de chiffrement.

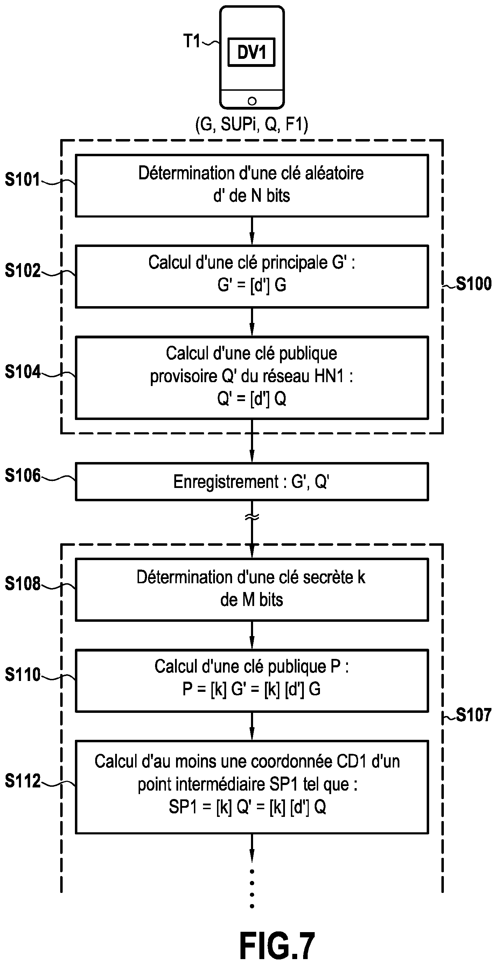

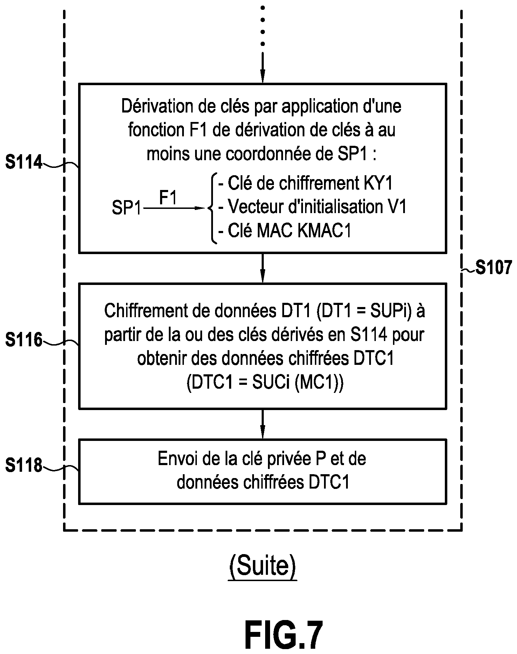

Un mode de réalisation particulier de l'invention est à présent décrit en référence à la **figure 7.** Plus précisément, le dispositif de traitement cryptographique DV1 met en œuvre le procédé de traitement cryptographique de l'invention en exécutant le programme PG1 selon un mode de réalisation particulier.

On suppose dans cet exemple que le dispositif DV1, constituant un module d'identité de souscripteur embarqué dans le terminal T1, réalise un traitement cryptographique visant en particulier à chiffrer des données DT1 puis à envoyer au réseau de télécommunications HN1 les données chiffrées - notées DTC1 - ainsi obtenues. Dans cet exemple, les données DT1 à chiffrer sont ou comprennent un identifiant SUPI (ou une sous-partie de celui-ci) du souscripteur UR au réseau HN1. Comme bien connu de l'homme du métier, un identifiant SUPI permet d'identifier un utilisateur auprès d'un réseau 5G auquel il a souscrit. Ces données DT1 peuvent être obtenues (reçues, déterminées, etc.) par le dispositif DV1 d'une quelconque manière.

Comme expliqué ci-après, le traitement cryptographique réalisé par le dispositif DV1 repose sur l'usage notamment d'une courbe elliptique ε que l'homme du métier à choisit en fonction du cas d'usage.

Plus spécifiquement, le dispositif DV1 réalise une phase d'initialisation S100 au cours de laquelle il détermine un point générateur provisoire G' et une clé provisoire Q'.

Le point générateur provisoire G' est égal à un premier produit tel que :

$$[\text{Math. 6}] \qquad G' = [d']G$$

où d' est un premier scalaire aléatoire formant une première clé secrète de N bits et G est un point générateur de la courbe elliptique ε précitée.

De plus, la clé provisoire Q' est égale à un deuxième produit tel que :

$$[\text{Math. 7}] \qquad Q' = [d']Q$$

où Q est un point de la courbe elliptique ε formant une clé publique associée à un deuxième système au sens de l'invention, à savoir le réseau HN1 dans cet exemple.

Le niveau N de codage en bits de la clé secrète d' est par exemple fixé à 256 bits, voire plus si un niveau de sécurité encore plus important est requis.

Comme déjà indiqué, diverses manières d'obtenir G' et Q' peuvent être envisagées. Selon un premier exemple, le dispositif DV1 ne calcule pas lui-même G' et Q' mais reçoit ceux-ci depuis l'extérieur. Les paramètres G' et Q' sont par exemple chargés dans le dispositif DV1 lors de sa personnalisation initiale, ou plus tard alors que le dispositif DV1 est déjà en service dans le terminal T1.

Selon un autre exemple représenté en **figure 7,** le dispositif DV1 calcule lui-même les paramètres G' et Q' à partir du premier scalaire aléatoire d'. Cet exemple particulier est décrit plus en détail ci-dessous. On considère ici que la phase d'initialisation S100 comprend les étapes S101, S102 et S104 décrites ci-après.

Au cours d'une étape S101 de détermination, le dispositif DV1 détermine un premier scalaire aléatoire d' qui forme une première clé secrète de N bits. Comme indiqué ci-avant, on suppose que N est fixé à 256, voire plus si besoin. Dans l'exemple considéré ici, le dispositif DV1 génère lui-même aléatoirement le scalaire d'. Selon une variante, le dispositif DV1 peut recevoir ce scalaire aléatoire d' depuis l'extérieur (chargement lors de la personnalisation par exemple, ou après sa mise en service).

Le dispositif DV1 calcule (S102) un point générateur provisoire G' de la courbe elliptique ε, ce point générateur provisoire G' étant égal au premier produit suivant :

$$[\text{Math. 8}] \qquad G' = [d']G$$

où d' est le premier scalaire aléatoire déterminé à l'étape S101 de détermination.

Le dispositif DV1 calcule (S104) également une clé provisoire Q' égale au deuxième produit suivant :

$$[\text{Math. 7}] \qquad Q' = [d']Q$$

où Q est un point de la courbe elliptique ε formant une clé publique associée à un deuxième système, à savoir le réseau HN1 dans cet exemple.

Pour ce faire, le dispositif DV1 extrait les paramètres G et Q stockés au préalable dans sa mémoire MR1. Les étapes de calcul S102 et S104 peuvent être réalisées simultanément ou selon un ordre quelconque.

Une fois le point générateur provisoire G' et la clé provisoire Q' déterminées en S100, le dispositif DV1 stocke (S106, **figure 7)** ces paramètres G' et Q' dans sa mémoire MR1 afin de pouvoir les utiliser lors de la phase de chiffrement S107 qui suit.

Au cours d'une phase de chiffrement S107 **(figure 7),** le dispositif DV1 utilise ainsi le point générateur provisoire G' et la clé provisoire Q' obtenus lors de la phase d'initialisation S100 pour chiffrer les données DT1 précitées. Comme déjà indiqué, on suppose dans cet exemple que ces données DT1 sont ou comprennent un identifiant SUPI (ou une sous-partie de celui-ci) du souscripteur UR au réseau HN1 **(figure 5)**. Comme décrit en détail ci-après, la phase de chiffrement S107 comprend dans cet exemple les étapes S108, S110, S112, S114, S116 et S118.

Au cours d'une étape S108 de détermination, le dispositif DV1 détermine un deuxième scalaire aléatoire formant une deuxième clé secrète k de M bits, avec M < N. Le niveau M de codage en bits de la deuxième clé secrète k est choisi par l'homme du métier en fonction du compromis qu'il souhaite atteindre dans chaque cas entre niveau de sécurité et coût du traitement cryptographique en ressources et en temps de traitement. Plus le niveau M de codage en bits est élevé, plus la sécurité est renforcée mais plus les ressources nécessaires et l'impact sur la vitesse de traitement seront élevés lors de la phase de chiffrement.

Selon un exemple particulier, N et M sont choisis de sorte que N est égal à 256 bits et M est égal à 32, 48, 64 ou 128 bits, d'autres combinaisons (N, M) étant toutefois possibles dans la mesure où la condition M < N est respectée.

Un des principes de l'invention réside dans le fait que la première clé secrète d' intervenant dans les calculs cryptographiques lors de la phase d'initialisation S100 est codée sur davantage de bits (sur N bits) que la deuxième clé secrète k intervenant dans les calculs cryptographiques lors de la phase de chiffrement S107, cette deuxième clé secrète k étant codée sur seulement M bits, avec M < N. L'écart entre M et N peut être ajusté au cas par cas. Ceci permet de faire reposer d'avantage le coût du traitement sur la phase d'initialisation S100 que sur la phase de chiffrement S107 qui est critique et nécessite généralement d'être réalisée rapidement à un instant donné. Comme indiqué par la suite, la phase de chiffrement S107 peut être réitérée plusieurs fois en utilisant les mêmes paramètres G' et Q' obtenus lors de la phase d'initialisation S100 afin de limiter encore davantage les coûts en ressources et temps de traitement.

Le dispositif DV1 calcule (S110) ensuite une clé publique P associée au dispositif DV1, P étant égale à un troisième produit tel que :

$$[\text{Math. 8}] \qquad P = [k]G' = [k][d']G$$

La confidentialité du logarithme discret de cette clé publique P ([k][d']) dépend donc de la taille en bits N de la première clé secrète d' et de la taille en bits M de la deuxième clé secrète k.

Au cours d'une étape S112 de calcul, le dispositif DV1 calcule au moins une coordonnée CD1 d'un point intermédiaire SP1, ledit point intermédiaire SP1 étant égal à un quatrième produit tel que :

$$[\text{Math. 9}] \qquad SP1 = [k]Q' = [k][d']Q$$

Bien que cela soit possible, il n'est pas nécessaire que le dispositif DV1 détermine toutes les coordonnées du point intermédiaire SP1 sur la courbe elliptique ε. Le dispositif DV1 peut calculer la coordonnée CD1 selon une direction x et/ou selon une direction y, ces directions x et y définissant un espace dans lequel s'étend la courbe elliptique ε. On supposera par la suite par souci de simplicité que le dispositif DV1 détermine une seule coordonnée CD1 du point intermédiaire SP1 lors de l'étape S112.

Au cours d'une étape S114 de dérivation, le dispositif DV1 dérive au moins une clé par application d'une fonction F1 de dérivation de clé à la coordonnée CD1 du point intermédiaire SP1. Autrement dit, le dispositif DV1 exécute la fonction F1 de dérivation de clé pour déterminer, à partir de la coordonnée CD1 du point intermédiaire SP1, au moins une clé. La nature et le nombre de clés peuvent varier selon le cas d'usage, et en particulier selon les types du chiffrement et de la fonction F1 considérés. Lors de l'étape S114, le dispositif DV1 peut ainsi générer une seule clé ou une pluralité de clés, la ou les clés étant utilisées dans l'étape S116 de chiffrement qui suit pour chiffrer les données DT1.

On suppose dans cet exemple que l'application de la fonction de dérivation F1, en prenant en entrée la coordonnée CD1, produits des paramètres (ou composantes) distincts, à savoir une clé de chiffrement KY1, un vecteur d'initialisation V1 et une clé MAC notée KMAC1. Une variante est possible dans laquelle la clé KMAC1 n'intervient pas, comme décrit ci-après.

A noter qu'une partie de la phase de chiffrement S107 peut être réalisée à l'avance, c'est-à-dire avant que les données DT1 à chiffrer soient déterminées ou obtenues par le dispositif DV1, ou avant que le dispositif DV1 ne détermine que les données DT1 doivent être chiffrées.

Selon un exemple particulier, le procédé comprend, avant l'étape S116 de chiffrement à venir, une étape (non représentée sur la figure) d'obtention des données DT1 à chiffrer et/ou une étape de détermination que les données DT1 doivent être chiffrées. Ces données DT1 peuvent être reçues ou déterminées d'une quelconque manière. Selon un exemple particulier, l'étape S108 de détermination de la clé secrète k, l'étape S110 de calcul de la clé publique P et l'étape S112 de calcul d'au moins une coordonnée CD1 d'un point intermédiaire SP1, voire même l'étape S114 de dérivation (ou au moins une partie de ces étapes), sont réalisées à l'avance, c'est-à-dire avant que le dispositif DV1 n'obtienne les données DT1 à chiffrer ou avant que le dispositif DV1 ne détermine que les données DT1 doivent être chiffrées, afin d'accélérer encore plus le processus de chiffrement.

Au cours d'une étape S116 de chiffrement, le dispositif DV1 chiffre les données DT1 à partir de la clé de chiffrement KY1 et du vecteur d'initialisation V1 qui ont été préalablement dérivés lors de l'étape S114 de dérivation, de sorte à obtenir des données chiffrées DTC1. Dans l'exemple considéré ici, le dispositif DV1 applique une fonction de chiffrement F2 pour chiffrer les données DT1 à partir de la clé de chiffrement KY1 et du vecteur d'initiation V1. Comme indiqué ci-avant, la fonction de chiffrement F2 est stockée dans cette exemple dans la mémoire MR1 du dispositif DV1. L'étape S116 de chiffrement permet ainsi de chiffrer l'identifiant de souscripteur SUPI (ou une sous-partie de celui-ci) compris dans les données DT1 de sorte à produire des données chiffrées DTC1 comprenant l'identifiant chiffré SUCI (ou une sous-partie de celui-ci) qui correspond à la version chiffrée du SUPI.

Dans cet exemple, on considère en outre que le dispositif DV1 calcule lors de l'étape S116 de chiffrement un code d'authentification MAC - noté MC1 - à partir des données chiffrées DTC1 et de la clé KMAC1. Le code d'authentification MAC est calculé à partir des données chiffrées DTC1 selon un quelconque procédé approprié. Comme bien connu de l'homme du métier, un code MAC est un code accompagnant des données pour assurer l'intégrité de celle-ci, en permettant une vérification ultérieure du code MAC après diffusion ou traitement des données en question. Ainsi, dans le cas présent, le code d'authentification MC1 permet au réseau HN1 de vérifier par la suite que les données chiffrées DTC1 reçues sont intègres (n'ont pas subi d'altérations).

Au cours d'une étape S118 d'envoi, le dispositif DV1 envoie ensuite au réseau HN1 (le deuxième système) la clé publique P calculée en S110 et les données chiffrées DTC1 pour déchiffrement par le réseau HN1. Dans cet exemple, le dispositif DV1 réalise la transmission S118 via le point d'accès AP1 du réseau HN1. Comme décrit par la suite, le réseau HN1 peut ensuite déchiffrer les données chiffrées TDC1 reçues.

Plus particulièrement, la clé publique P permet au réseau HN1 de recalculer la coordonnée CD1 du point intermédiaire SP1 à partir d'un scalaire formant une clé secrète - notée a - du réseau HN1, dans lequel :

$$[\text{Math. 10}] \quad SP1 = [a]P$$

La coordonnée CD1 du point intermédiaire SP1 permet ensuite au réseau HN1 de déchiffrer les données chiffrées DTC1 et ce, sans avoir connaissance des clés secrètes k et d', comme expliqué ultérieurement.

Dans l'exemple considéré ici, outre la clé publique P et les données chiffrées DTC1, le dispositif DV1 envoie au réseau HN1 lors de l'étape S118 le code d'authentification MC1 calculé en S116 pour permettre au réseau HN1 de vérifier par la suite l'intégrité des données chiffrées DTC1 reçues. Le dispositif DV1 peut insérer le code d'authentification MC1 dans les données chiffrées DTC1 avant leur envoi S118 au réseau HN1. En variante, le code d'authentification MC1 est envoyé (S118) en accompagnement des données chiffrées DTC1.

A noter que le principe de l'invention peut être mis en œuvre sans utiliser ou transmettre un code MAC. L'usage d'un code MAC est cependant avantageux dans la mesure où il permet à l'entité réceptrice (le réseau HN1 dans cet exemple) de vérifier l'intégrité des données chiffrées DTC1 reçues.

L'invention met ainsi en œuvre un traitement cryptographique (par exemple de type Diffie-Hellman) basé sur les courbes elliptiques qui permet de chiffrer (ou déchiffrer, comme décrit ci-après) des données en assurant un bon compromis entre le niveau de sécurité atteint et le coût requis en ressources et temps de traitement. Pour ce faire, le point générateur G et la clé publique Q utilisées pour calculer respectivement la clé publique P et le point intermédiaire SP1 (ou au moins une coordonnée CD1 de SP1) dans les étapes S42 et S44 comme décrit ci-avant en référence à la **figure 3,** sont remplacés respectivement par un point générateur provisoire G' et une clé provisoire Q' obtenus lors d'une phase d'initialisation, ces paramètres G' et Q' dépendant tous deux d'une même clé secrète d' codée sur N bits.

Un haut niveau de sécurité est ainsi assuré grâce notamment à l'usage d'une première clé secrète d', codée sur un nombre N de bits, pour déterminer le point générateur provisoire G' et la clé publique provisoire Q'. Le point générateur provisoire G' et la clé publique provisoire Q' interviennent eux-mêmes dans le calcul de la clé publique P et de la coordonnée CD1 du point intermédiaire SP1 lors de la phase de chiffrement, ce qui permet de renforcer la sécurité de ces calculs. Ainsi, les valeurs de la clé publique P et de la coordonnée CD1 dépendent non seulement de la deuxième clé secrète k (codée sur M bits) mais également de la première clé secrète d' (codée sur N bits).

En outre, il est possible de limiter les ressources nécessaires au niveau du dispositif DV1 pour déterminer la clé publique P et la coordonnée CD1, ou du moins d'améliorer la gestion de ces ressources, en décomposant les calculs de ces deux éléments en deux phases. Lors de la phase d'initialisation S100, le dispositif DV1 peut obtenir le point générateur provisoire G' et/ou la clé provisoire Q' depuis l'extérieur ou les déterminer par calcul à un moment opportun, par exemple en amont de la phase de chiffrement S107, par exemple pendant une période d'inactivité ou tout du moins lorsque les ressources nécessaires sont disponibles. Il est ainsi possible d'accélérer la vitesse du chiffrement des données DT1 en déterminant à l'avance, lors d'une phase d'initialisation, le point générateur provisoire G' et la clé provisoire Q' pour un usage immédiat lorsque la phase de chiffrement est déclenchée, et ce quelle que soient les données à chiffrer.

L'invention permet de réaliser les calculs cryptographiques les plus coûteux en temps et en ressources lors de la phase d'initialisation S100 avant d'initier la phase de chiffrement S107. La première clé secrète d' étant codée sur plus de bits que la second clé secrète k, la phase d'initialisation S100 concentre les calculs les plus coûteux. Les opérations de calcul lors de la phase de chiffrement S107 sont donc moins coûteuses dans la mesure où k intervenant dans les troisième et quatrième produits (S110 et S112) est de résolution moindre.

Selon un exemple particulier, la phase S107 de chiffrement **(figure 7)** est déclenchée sur détection d'au moins un événement, la phase d'initialisation S100 étant réalisée avant la détection dudit au moins un événement.

La phase S107 de chiffrement (figure 7) des données DT1, comprenant l'identifiant SUPI (ou une sous-partie de celui-ci), est par exemple déclenchée en réponse à la réception, depuis le point d'accès AP1, d'une requête d'enregistrement (par exemple une « registration request » ou une « Identity Request » telles que prévues dans la norme ETSI TS 133 501, par exemple dans la Version 15.3.1 Release 15) du dispositif DV1 auprès du réseau HN1.

Selon un exemple particulier, la phase d'initialisation S100 ne se produit qu'une seule fois, par exemple lors du premier démarrage du dispositif DV1 ou pendant la fabrication du dispositif DV1 (par exemple pendant sa pré-personnalisation ou personnalisation).

Comme décrit par la suite dans des exemples particuliers, la phase d'initialisation S100 peut également se produire de multiples fois, de préférence lors de périodes prédéfinies propices à ce type de traitement.

Par ailleurs, la manière dont le réseau HN1 déchiffre les données chiffrées DTC1 fournies en S118 **(figure 7)** par le dispositif DV1 n'est pas modifiée par le procédé de chiffrement mise en œuvre par le dispositif DV1. Autrement dit, le réseau HN1 peut déchiffrer les données DTC1 fournies en S118 **(figure 7)** par le dispositif DV1 selon le même procédé que celui décrit ci-avant en référence à la **figure 4.**

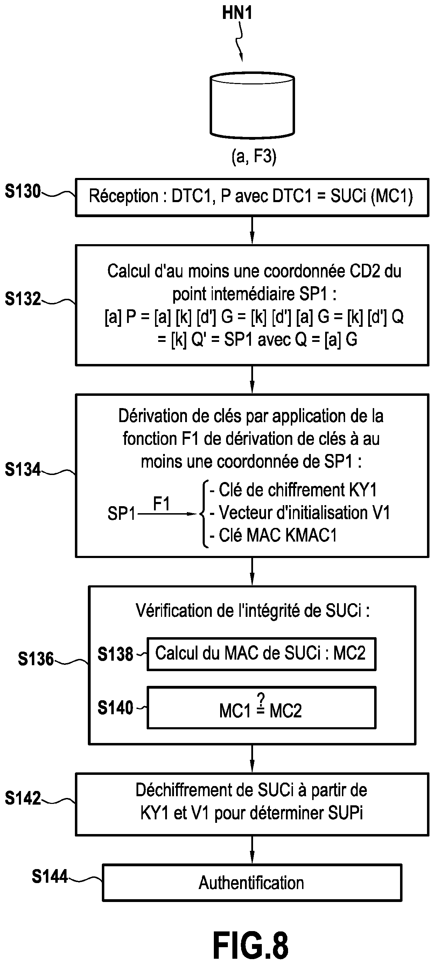

En référence à la **figure 8,** il est à présent décrit ci-dessous un procédé de traitement mis en œuvre par le réseau HN1 pour déchiffrer les données DTC1 préalablement chiffrées par le dispositif DV1 selon le principe de l'invention.

Au cours d'une étape S130 de réception, le réseau HN1 reçoit via son point d'accès AP1 les données chiffrées DTC1 et la clé publique P fournies par le dispositif DV1. On suppose ici que le code d'authentification MC1 est inclus dans les données chiffrées DTC1.

Au cours d'une étape S132 de calcul, le réseau HN1 calcule de façon identique à l'étape de calcul S62 **(figure 4)** précédemment décrite ladite au moins une coordonnée CD1 du point intermédiaire SP1 de la courbe elliptique ε, c'est-à-dire dans cet exemple la coordonnée CD1 déterminée en S112 **(figure 7)** par le dispositif DV1. Dans cet exemple, le réseau 6 calcule donc l'unique coordonnée CD1 (suivant x ou y par exemple) utilisée par le dispositif DV1 pour chiffrer les données DT1.

Le point intermédiaire SP1 est égal au produit de la clé secrète - notée a - du réseau HN1 par la clé publique P comme défini ci-dessous :

$$[\text{Math. 11}] \quad [a]P = [a][k][d']G = [k][d'][a]G = [k][d']Q = [k]Q' = SP1$$

étant entendu que la clé publique Q du réseau HN1 est égale au produit de la clé secrète a par le point générateur G comme défini ci-dessous :

$$[\text{Math. 12}] \quad Q = [a]G$$

Comme indiqué ci-avant, le réseau HN1 dispose en mémoire de sa clé secrète a. Ainsi, il peut retrouver par calcul la coordonnée CD1 du point intermédiaire SP1 sans avoir connaissance de la première clé secrète d' ni de la deuxième clé secrète k.

Comme illustré en **figure 8,** le réseau HN1 réalise ensuite les étapes S134, S136, S138, S140, S142 et S144 de façon identique respectivement aux étapes S64, S66, S68, S70, S72 et S74 telles que déjà décrites ci-avant en référence à la **figure 4.**

Plus particulièrement, le réseau HN1 dérive (S134) ensuite la clé de chiffrement KY1, le vecteur d'initialisation V1 et, le cas échéant, la clé MAC notée KMAC1, en appliquant la fonction F1 de dérivation de clé de façon identique à l'étape S114 de dérivation effectuée au préalable par le dispositif DV1. Pour ce faire, le réseau HN1 applique la fonction F1 de dérivation de clé à la coordonnée CD1 du point intermédiaire SP1 obtenue en S132. La clé KY1 fait ici office de clé de déchiffrement pour déchiffrer les données chiffrées DTC1 comprenant l'identifiant chiffré SUCI.

Au cours d'une étape S136 de vérification, le réseau HN1 vérifie l'intégrité des données chiffrées DTC1 reçues en S130 depuis le dispositif DV1. Pour ce faire, le réseau HN1 calcule, à partir de la clé MAC KMAC1 obtenue en S134, un code d'authentification MAC - noté MC2 - des données chiffrées DTC1 fourni par le dispositif DV1. Le réseau HN1 compare (S140) ensuite le code d'authentification MC2 calculé en S138 avec le code d'authentification MC1 reçu en S130 en provenance du dispositif DV1. Si les codes d'authentification MC1 et MC2 coïncident, le réseau HN1 en déduit que les données chiffrées DTC1 reçues en S130 sont intègres et le procédé procède alors à l'étape S142 de déchiffrement. Dans le cas contraire, les données chiffrées DTC1 reçues ne sont pas intègres et le procédé de déchiffrement prend fin.

Au cours de l'étape S142 de déchiffrement, le réseau HN1 déchiffre alors les données chiffrées DTC1 (comprenant l'identifiant chiffrée SUCI ou une partie de celui-ci) selon le principe inverse de l'étape de chiffrement S116 **(figure 7)** réalisée préalablement par le dispositif DV1. Plus particulièrement, le réseau HN1 déchiffre ou décrypte (S142) les données chiffrées DTC1 à partir de la clé de déchiffrement KY1 et du vecteur d'initialisation V1 obtenus lors de l'étape S134 de dérivation de sorte à retrouver les données DT1 sous forme déchiffrée, y compris l'identifiant souscripteur SUPI (ou une sous-partie de celui-ci). Pour ce faire, le réseau HN1 applique en particulier aux données chiffrées DTC1 une fonction de déchiffrement F3 (où F3 est la fonction inverse de la fonction de chiffrement F2 utilisée en S116 par le dispositif DV1) en utilisant la clé de déchiffrement KY1 et le vecteur d'initialisation V1, de sorte à obtenir les données déchiffrées DT1.

A partir de l'identifiant SUPI compris dans les données DT1 déterminées en S142, le réseau HN1 peut alors procéder à l'authentification (S144) du souscripteur, comme déjà décrit ci-avant en référence aux **figures 1** et **2.**

Comme déjà indiqué, les traitements cryptographiques de chiffrage et de déchiffrage réalisés respectivement par le dispositif DV1 et par le réseau HN1 permettent dans ce cas particulier au dispositif DV1 de s'authentifier ultérieurement de façon sécurisée auprès du réseau HN1 sans fournir l'identifiant SUPI du souscripteur sous sa forme déchiffrée. Ces traitements cryptographiques sont avantageux en ce qu'ils permettent de combattre notamment les interceptions non autorisées d'identifiants SUPI par des tiers malveillants, renforçant ainsi la sécurité des données personnelles et de la vie privée des utilisateurs.

Selon un exemple particulier, la séquence des étapes S100-S118 décrite ci-avant en référence à la **figure 7** est exécutée de multiples fois pour chiffrer et envoyer sous forme chiffrer des données DT1 à un ou des deuxièmes systèmes. La phase d'initialisation S100 peut ainsi est réitérée avant chaque itération de la phase de chiffrement S107.

L'invention est également avantageuse en ce qu'il est possible de réaliser plusieurs itérations de la phase de chiffrement S107 en utilisant le même point générateur provisoire G' et la même clé provisoire Q' déterminées lors de la phase d'initialisation S100, ce qui permet de réduire encore les coûts requis en ressources et en temps de traitement pour réaliser des chiffrements de données DT1. Il n'est alors pas nécessaire de réaliser la phase d'initialisation S100 avant chaque phase de chiffrement S107.

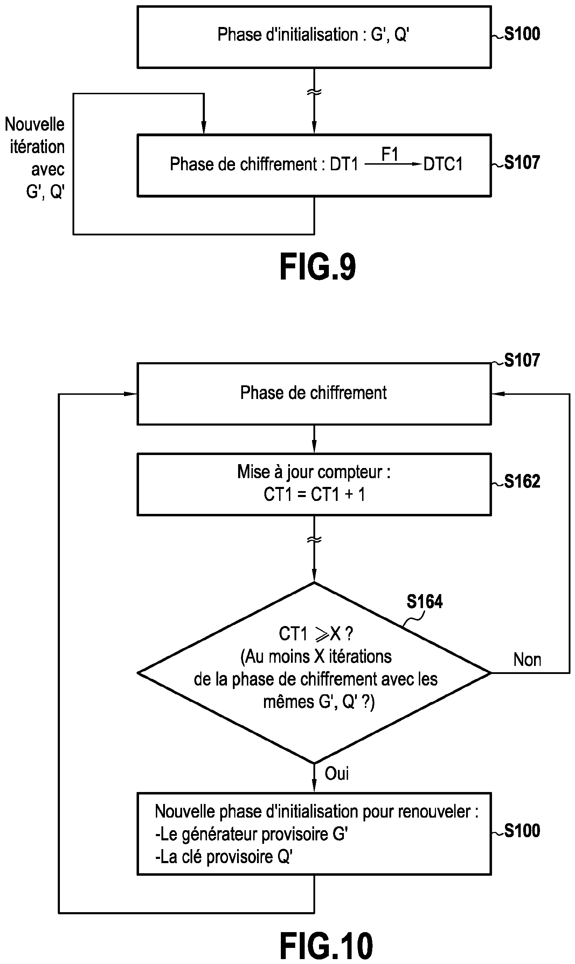

Ainsi, comme représenté en **figure 9** dans un mode de réalisation particulier, le dispositif DV1 réalise la phase d'initialisation S100 comme décrit précédemment puis réalise au moins deux itérations successives de la phase de chiffrement S107, à partir du point générateur provisoire G' et de la clé provisoire Q' déterminés lors de la phase d'initialisation S100, pour chiffrer des données DT1 qui sont envoyées au deuxième système (le réseau HN1) pour déchiffrement. A noter que les données DT1 qui sont chiffrées à chaque itération de la phase de chiffrement S107, ainsi que le deuxième système vers lequel sont envoyées ces données chiffrées DTC1, peuvent varier.

Ainsi, les clés G' et Q' issues des premier et deuxième produits S102, S104 lors de la phase d'initialisation S100 peuvent être utilisés plusieurs fois, lors de multiples itérations successives de la phase de chiffrement S107 pour communiquer avec un ou plusieurs deuxièmes systèmes, par exemple pour authentifier plusieurs fois un souscripteur UR au cours du temps auprès d'un ou plusieurs réseaux de télécommunications. Il n'est alors pas nécessaire de réaliser la phase d'initialisation avant chaque phase de chiffrement. La phase d'initialisation S100 peut par exemple être réalisées toutes les X phases de chiffrement S107 (ou X est un entier supérieur ou égal à 2).

Ceci permet de limiter les temps de traitement lors des calculs cryptographiques réalisées par le dispositif DV1 tout en assurant un niveau de sécurité élevé du fait que non seulement la clé secrète k, mais également la clé secrète d', interviennent dans les produits lors de la phase de chiffrement S107.

Par ailleurs, il est possible de réaliser de multiples itérations de la phase d'initialisation S100 afin de renouveler (modifier) le générateur provisoire G' et la clé provisoire Q' qui sont utilisés lors de différentes itérations de la phase de chiffrement S107 pour chiffrer des données DT1.

Selon un mode de réalisation particulier, le dispositif DV1 monitore le nombre d'itérations successives de la phase de chiffrement S107 réalisées avec le même point générateur provisoire G' et la même clé provisoire Q' déterminés lors de la phase d'initialisation S100. Sur détection qu'au moins X itérations successives de la phase de chiffrement S107 ont été réalisées, à partir du même point générateur provisoire G' et de la même clé provisoire Q' déterminés lors de la phase d'initialisation S100 pour envoyer des données chiffrées DTC1 au deuxième système (à savoir le réseau HN1 dans cet exemple), le dispositif DV1 réalise une nouvelle itération de la phase d'initialisation S100 pour renouveler (et donc modifier) le générateur provisoire G' et la clé provisoire Q' à partir d'une nouvelle première clé aléatoire secrète d' différente de la première clé aléatoire secrète d' déterminée lors de la précédente itération de la phase d'initialisation S100. Le générateur provisoire G' renouvelé et la clé provisoire Q' renouvelée sont alors utilisés lors d'au moins une itération ultérieure de la phase de chiffrement S107 pour chiffrer des nouvelles données DT1 et pour envoyer ces nouvelles données chiffrées DTC1 à un deuxième système (à savoir le réseau HN1 dans cet exemple).

Le nombre X est un entier tel que $X \geq 1$. Selon un exemple particulier, $X \geq 2$ ce qui signifie que le dispositif réalise au moins deux itérations successives de la phase de chiffrement S107 avec les mêmes valeurs de G' et Q' avant de renouveler ces valeurs en vue de réaliser un nouveau chiffrement.

Le dispositif DV1 peut ainsi renouveler périodiquement les paramètres G' et Q' pour renforcer la sécurité tout en maintenant de bonnes performances de traitement, par exemple pour authentifier plusieurs fois le dispositif DV1 auprès du réseau HN1. En particulier, le renouvellement régulier des paramètres G' et Q' (et donc de la première clé secrète d') permet d'empêcher un tiers malveillant de tracer le dispositif DV1 au cours du temps lorsque celui-ci s'enregistre en tant que module d'identité de souscripteur embarqué auprès d'un réseau de télécommunications. Il est en effet difficile pour un tiers de tracer un utilisateur à partir des clés publique P échangées pendant diverses itérations de la phase de chiffrement ou du procédé, car ces clés ne sont pas différenciées uniquement par la clé secrète k mais par cette clé secrète k et par le point générateur provisoire G'.

Pour ce faire, le dispositif DV1 peut utiliser un compteur CT pour suivre le nombre de fois qu'un même couple (G', Q') a été utilisé pour s'authentifier auprès du réseau.

Un mode de réalisation particulier est à présent décrit en référence à la **figure 10.** On suppose que le dispositif DV1 réalise la phase de chiffrement S107 comme déjà décrit précédemment. Sur détection que cette phase de chiffrement S107 est réalisée (ou initiée, ou en cours de réalisation), le dispositif DV1 met également à jour (S162) un compteur CT1. Dans cet exemple, le compteur CT1 est incrémenté de 1 à chaque nouvelle itération de la phase de chiffrement S107.

Puis, sur détection qu'un nouveau chiffrement doit être réalisé, le dispositif DV1 détermine (S164) à partir de la valeur courante de son compteur CT1 si au moins X itérations successives de la phase de chiffrement S107 ont été réalisée avec les mêmes valeurs de G' et Q'. Pour ce faire, le dispositif DV1 détermine si le compteur CT1 est supérieur ou égal à la valeur seuil X. Dans l'affirmative, le procédé se poursuit en S100 pour renouveler les paramètres G' et Q' au cours d'une nouvelle itération de la phase d'initialisation S100 et réinitialiser le compteur CT1, sinon le dispositif DV1 réalise une nouvelle itération de la phase de chiffrement S107 sans modifier les paramètres G' et Q'.

Ainsi, au cours de la nouvelle itération de la phase d'initialisation S100, le dispositif DV1 renouvelle (modifie) le générateur provisoire G' et la clé provisoire Q'. Le dispositif DV1 réalise ensuite une nouvelle itération de la phase de chiffrement S107 en utilisant les valeurs renouvelées de G' et Q' obtenues en S100, et ainsi de suite.

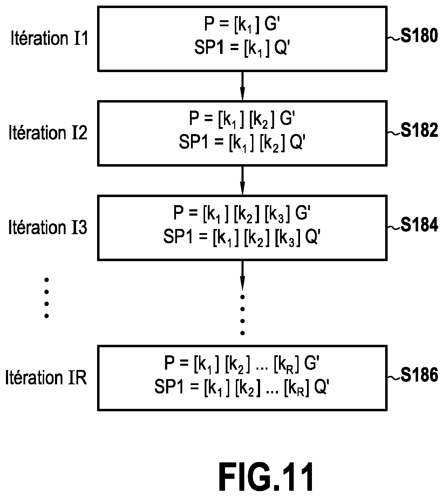

Selon un mode de réalisation particulier illustré en **figure 11,** à chaque itération de la phase de chiffrement S107, le générateur provisoire G' et la clé provisoire Q' utilisées lors de l'itération courante de ladite phase de chiffrement S107 sont égaux respectivement à la clé publique P et au point intermédiaire SP1 qui ont été calculés lors de la précédente itération de la phase de chiffrement S107.

Plus généralement, pour au moins une itération de la phase de chiffrement S107, le générateur provisoire G' et la clé provisoire Q' utilisées lors de l'itération courante de ladite phase de chiffrement S107 peuvent être égaux respectivement à la clé publique P et au point intermédiaire SP1 qui ont été calculés lors de la précédente itération de la phase de chiffrement S107.

Autrement dit, on remplace les paramètres G' et Q' de l'itération courante par les valeurs [k]G' et [k]Q' de l'itération précédente de la phase de chiffrement S107, ce qui permet de renforcer la sécurité dans la mesure où il est plus difficile pour un tiers malveillant (intercepteur d'identifiants) de tracer un module d'identité de souscripteur embarqué à partir des SUCI successifs générés par ledit module pour s'authentifier auprès d'un réseau de télécommunications.

A noter toutefois que, bien que cela soit possible, il n'est pas obligatoire d'utiliser la même valeur de la clé secrète k à chaque itération de la phase de chiffrement S107.

Comme illustré en **figure 11,** on peut ainsi utiliser :

- une clé secrète $k_1$ à l'itération I1 (S180) de sorte que :
  $P=[k_1]G'$ et $SP1=[k_1]Q$ ;

- une clé secrète $k_2$ à l'itération I2 (S182) de sorte que :
  $P=[k_1][k_2]G'$ et $SP1=[k_1][k_2]Q'$ ;

- une clé secrète $k_3$ à l'itération I3 (S182) de sorte que :
  $P=[k_1][k_2][k_3]G'$ et $SP1=[k_1][k_2][k_3]Q'$ ; etc.

Ainsi, à l'itération $I_R$ (S186) avec R un entier au moins égal à 2, P et SP1 sont tels que : $P=[k_1][k_2]...[k_R]G'$ et $SP1=[k_1][k_2]...[k_R]Q'$.

Dans un cas particulier, on utilise la même valeur de la clé secrète k pour chaque itération. Ainsi, à l'itération $I_R$ (S186), P et SP1 sont tels que : $P=[k]^R G'$ et $SP1=[k]^R Q'$.

Dans les modes de réalisation décrit ci-avant, l'invention est appliquée au cas du chiffrement de données. Comme déjà indiqué, l'invention ne se limite toutefois pas à ce cas particulier, et s'applique également au déchiffrement de données chiffrées. Pour ce faire, l'invention prévoit en outre un deuxième procédé de traitement cryptographique qui s'appuie sur un principe analogue au premier procédé de traitement cryptographique décrit ci-avant.

Ainsi, selon un mode de réalisation particulier, le dispositif DV1 est configuré pour réaliser un deuxième traitement cryptographique. Selon ce mode particulier, le dispositif DV1 coopère avec un deuxième système quelconque (noté HN1), ledit procédé comprenant :

- une phase d'initialisation comprenant :

  ○ détermination d'un point générateur provisoire G' égal à un premier produit tel que $G'=[d']G$, où d'est un premier scalaire aléatoire formant une première clé secrète de N bits et G est un point générateur d'une courbe elliptique ; et
  ○ détermination d'une clé provisoire Q' égale à un deuxième produit tel que $Q'=[d']Q$, où Q est un point de la courbe elliptique formant une clé publique associée au deuxième système ; et

- une phase de déchiffrement comprenant :

  ○ détermination d'un deuxième scalaire aléatoire formant une deuxième clé secrète k de M bits, avec M < N ;
  ○ calcul d'une clé publique P associée au dispositif, P étant égale à un troisième produit tel que $P=[k]G'$ ;
  ○ envoi de la clé publique P à un deuxième système ;
  ○ réception, en provenance du deuxième système, de données chiffrées ;
  ○ calcul d'au moins une coordonnée d'un point intermédiaire SP1, de la courbe elliptique, égal à un quatrième produit tel que $SP1=[k]Q'$ ;
  ○ dérivation d'au moins une clé par application d'une fonction de dérivation de clé à ladite au moins une coordonnée du point intermédiaire SP1 ; et
  ○ déchiffrement des données chiffrées à partir de ladite au moins une clé dérivée lors de ladite dérivation, de sorte à obtenir des données déchiffrées.

La phase d'initialisation peut être réalisée de façon analogue à la phase d'initialisation S100 décrite précédemment **(figure 7)**. En particulier, la détermination de la clé aléatoire d', ainsi que les calculs de la clé principale G' et de la clé publique provisoire Q' peuvent être réalisés respectivement de façon analogue aux étapes S101, S102 et S104 décrites précédemment.

La phase de déchiffrement peut également être réalisée de façon similaire à la phase de chiffrement S107 décrite précédemment **(figure 7)**. En particulier, la détermination d'une deuxième clé secrète k et le calcul d'une clé publique P peuvent être réalisés respectivement de façon analogue aux étapes S108 et S110 décrites précédemment. De même, le calcul d'au moins une coordonnée d'un point intermédiaire SP1 et la dérivation d'au moins une clé par application d'une fonction de dérivation de clé peuvent être réalisés respectivement de façon analogue aux étapes S112 et S114 décrites précédemment. Enfin, le déchiffrement des données chiffrées peut être réalisé de façon analogue à l'étape S116 de chiffrement décrite précédemment.

A noter que l'ordre dans lequel s'enchaînent les étapes des procédés de traitement cryptographique de l'invention tels que décrits dans les modes de réalisation ci-avant ne constitue qu'un exemple de réalisation, des variantes étant possibles.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

**Revendications**

1. Procédé de traitement cryptographique mis en œuvre par un dispositif (DV1) coopérant avec un deuxième système (HN1), ledit procédé comprenant :

    - une phase d'initialisation (S100) comprenant :

        ◦ détermination (S102) d'un point générateur provisoire G' égal à un premier produit tel que G'=[d']G, où d'est un premier scalaire aléatoire formant une première clé secrète de N bits et G est un point générateur d'une courbe elliptique (ε) ; et
        ◦ détermination (S104) d'une clé provisoire Q' égale à un deuxième produit tel que Q'=[d']Q, où Q est un point de la courbe elliptique (ε) formant une clé publique associée au deuxième système ; et

    - une phase de chiffrement (S107) comprenant :

        ◦ détermination (S108) d'un deuxième scalaire aléatoire formant une deuxième clé secrète k de M bits, avec M < N ;
        ◦ calcul (S110) d'une clé publique P associée au dispositif, P étant égale à un troisième produit tel que P=[k]G' ;
        ◦ calcul (S112) d'au moins une coordonnée (CD1) d'un point intermédiaire SP1, de la courbe elliptique, égal à un quatrième produit tel que SP1=[k]Q' ;
        ◦ dérivation (S114) d'au moins une clé (KY1, V1, KMAC1) par application d'une fonction (F1) de dérivation de clé à ladite au moins une coordonnée (CD1) du point intermédiaire SP1 ;
        ◦ chiffrement (S116) de données (SUPI) à partir de ladite au moins une clé dérivée lors de ladite dérivation, de sorte à obtenir des données chiffrées ; et
        ◦ envoi (S118) au deuxième système de la clé publique P et des données chiffrées pour déchiffrement par le deuxième système.

2. Procédé selon la revendication 1, dans lequel la clé publique P permet au deuxième système de recalculer ladite au moins une coordonnée du point intermédiaire SP1 à partir d'un scalaire formant une clé secrète - notée a - du deuxième système, où SP1=[a]P, et dans lequel ladite au moins une coordonnée du point intermédiaire SP1 permet au deuxième système de déchiffrer les données chiffrées.

3. Procédé selon l'une quelconque des revendications 1 à 2, dans lequel la phase d'initialisation comprend :

    - détermination (S101) du premier scalaire aléatoire formant ladite première clé secrète d'de N bits ;
    - calcul (S102) du point générateur provisoire G' égal au premier produit tel que G'=[d']G ; et
    - calcul (S104) de la clé provisoire Q' égale au deuxième produit tel que Q'=[d']Q.

4. Procédé selon l'une quelconque des revendications 1 à 3, dans lequel, suite à la phase d'initialisation, le procédé comprend un enregistrement du générateur provisoire G' et de la clé provisoire Q' dans une mémoire non volatile du dispositif.

5. Procédé selon l'une quelconque des revendications 1 à 4, dans lequel la phase de chiffrement est déclenchée sur détection d'au moins un événement, ladite phase d'initialisation étant réalisée avant ladite détection.

6. Procédé selon l'une quelconque des revendications 1 à 5, dans lequel lors de ladite dérivation d'au moins une clé, l'application de la fonction (F1) de dérivation de clé à ladite au moins une coordonnée du point intermédiaire SP1 produit une clé de chiffrement (KY1), un vecteur d'initialisation (V1) et une clé MAC (KMAC1) ; dans lequel ledit chiffrement comprend :

    - application d'une fonction de chiffrement (F2) pour chiffrer lesdites données à partir de la clé de chiffrement et du vecteur d'initialisation ; et
    - calcul d'un code d'authentification MAC (MC1) à partir des données chiffrées et de la clé MAC ;

dans lequel, outre la clé publique P et les données chiffrées, le dispositif envoie au deuxième système le code d'authentification MAC (MC1) pour permettre au deuxième système de vérifier l'intégrité des données chiffrées.

7. Procédé selon l'une quelconque des revendications 1 à 6, dans lequel le dispositif réalise au moins deux itérations successives de la phase de chiffrement, à partir dudit point générateur provisoire G' et de ladite clé provisoire Q' déterminés lors de la phase d'initialisation, pour chiffrer des données qui sont envoyées au deuxième système pour déchiffrement.

8. Procédé selon l'une quelconque des revendications 1 à 7, dans lequel, pour au moins une itération de la phase de chiffrement, le générateur provisoire G' et la clé provisoire Q' utilisées lors de l'itération courante son égaux respectivement à la clé publique P et au point intermédiaire SP1 qui ont été calculés lors de la précédente itération de la phase de chiffrement.

9. Procédé selon l'une quelconque des revendications 1 à 8, dans lequel le procédé comprend en outre, sur détection que le dispositif a réalisé, à partir dudit point générateur provisoire G' et de ladite clé provisoire Q' déterminés lors de la phase d'initialisation, au moins X itérations successives de la phase de chiffrement pour envoyer des données chiffrées au deuxième système, X étant un entier tel que X ≥ 1 :

   - réalisation d'une nouvelle itération de la phase d'initialisation pour renouveler le générateur provisoire G' et la clé provisoire Q' à partir d'une nouvelle première clé aléatoire secrète d' différente de la première clé aléatoire déterminée lors de la précédente itération de la phase d'initialisation ;

   le générateur provisoire G' renouvelé et la clé provisoire Q' renouvelée étant utilisés lors d'au moins une itération ultérieure de la phase de chiffrement pour envoyer de nouvelles données chiffrées au deuxième système.

10. Procédé selon l'une quelconque des revendications 1 à 9, dans lequel :

   - le deuxième système est un réseau de télécommunications ;
   - le dispositif est un module d'identité de souscripteur embarqué d'un terminal pour authentifier ledit terminal auprès du réseau de télécommunications ;
   - les données comprennent un identifiant (SUPI) du module d'identité de souscripteur embarqué ;
   - lors dudit chiffrement, l'identifiant est chiffré à partir de ladite au moins une clé dérivée lors de ladite dérivation, de sorte à obtenir un identifiant chiffré (SUCI) ; et
   - lors dudit envoi, la clé publique P et l'identifiant chiffré sont envoyés à un point d'accès du réseau de télécommunications pour permettre audit module d'identité de souscripteur embarqué de s'authentifier auprès dudit réseau de télécommunications.

11. Procédé selon la revendication 10, dans lequel la phase de chiffrement est déclenchée sur détection d'au moins un événement, ladite phase d'initialisation étant réalisée avant ladite détection, ledit au moins un événement comprenant la réception, depuis le point d'accès du réseau de télécommunications, d'une requête d'enregistrement du module d'identité de souscripteur embarqué auprès dudit réseau de télécommunications.

12. Procédé selon la revendication 10 ou 11, dans lequel le réseau de télécommunications est un réseau mobile 5G et l'identifiant du module d'identité de souscripteur embarqué est un identifiant SUPI.

13. Procédé de traitement cryptographique mis en œuvre par un dispositif (DV1) coopérant avec un deuxième système (HN1), ledit procédé comprenant :

   - une phase d'initialisation comprenant :

      ∘ détermination d'un point générateur provisoire G' égal à un premier produit tel que G'=[d']G, où d'est un premier scalaire aléatoire formant une première clé secrète de N bits et G est un point générateur d'une courbe elliptique ($\varepsilon$) ; et
      ∘ détermination d'une clé provisoire Q' égale à un deuxième produit tel que Q'=[d']Q, où Q est un point de la courbe elliptique ($\varepsilon$) formant une clé publique associée au deuxième système ; et

   - une phase de déchiffrement comprenant :

◦ détermination d'un deuxième scalaire aléatoire formant une deuxième clé secrète k de M bits, avec M < N ;

◦ calcul d'une clé publique P associée au dispositif, P étant égale à un troisième produit tel que P=[k]G' ;

◦ envoi de la clé publique P à un deuxième système ;

◦ réception, en provenance du deuxième système, de données chiffrées (SUCI) ;

◦ calcul d'au moins une coordonnée (CD1) d'un point intermédiaire SP1, de la courbe elliptique, égal à un quatrième produit tel que SP1=[k]Q' ;

◦ dérivation d'au moins une clé (KY1, V1, KMAC1) par application d'une fonction (F1) de dérivation de clé à ladite au moins une coordonnée (CD1) du point intermédiaire SP1 ; et

◦ déchiffrement des données chiffrées à partir de ladite au moins une clé dérivée lors de ladite dérivation, de sorte à obtenir des données déchiffrées.

**14.** Dispositif de traitement cryptographique apte à coopérer avec un deuxième système, comprenant :

- un module d'initialisation configuré pour réaliser une phase d'initialisation comprenant :

◦ détermination d'un point générateur provisoire G' égal à un premier produit tel que G'=[d']G, où d'est un premier scalaire aléatoire formant une première clé secrète de N bits et G est un point générateur d'une courbe elliptique (ε) ; et

◦ détermination d'une clé provisoire Q' égale à un deuxième produit tel que Q'=[d']Q, où Q est un point de la courbe elliptique (ε) formant une clé publique associée au deuxième système ; et

- un module de chiffrement configuré pour réaliser une phase de chiffrement comprenant :

◦ détermination d'un deuxième scalaire aléatoire formant une deuxième clé secrète k de M bits, avec M < N ;

◦ calcul d'une clé publique P associée au dispositif, P étant égale à un troisième produit tel que P=[k]G' ;

◦ calcul d'au moins une coordonnée d'un point intermédiaire SP1, de la courbe elliptique, égal à un quatrième produit tel que SP1=[k]Q' ;

◦ dérivation d'au moins une clé (KY1, V1, KMAC1) par application d'une fonction (F1) de dérivation de clé à ladite au moins une coordonnée du point intermédiaire SP1 ;

◦ chiffrement de données (SUPI) à partir de ladite au moins une clé dérivée lors de ladite dérivation, de sorte à obtenir des données chiffrées ; et

◦ envoi au deuxième système de la clé publique P et des données chiffrées pour déchiffrement par le deuxième système.

**15.** Dispositif de traitement cryptographique apte à coopérer avec un deuxième système, comprenant :

- un module d'initialisation configuré pour réaliser une phase d'initialisation comprenant :

◦ détermination d'un point générateur provisoire G' égal à un premier produit tel que G'=[d']G, où d'est un premier scalaire aléatoire formant une première clé secrète de N bits et G est un point générateur d'une courbe elliptique (ε) ; et

◦ détermination d'une clé provisoire Q' égale à un deuxième produit tel que Q'=[d']Q, où Q est un point de la courbe elliptique (ε) formant une clé publique associée au deuxième système ; et

- un module de déchiffrement configuré pour réaliser une phase de déchiffrement comprenant :

◦ détermination d'un deuxième scalaire aléatoire formant une deuxième clé secrète k de M bits, avec M < N ;

◦ calcul d'une clé publique P associée au dispositif, P étant égale à un troisième produit tel que P=[k]G' ;

◦ envoi de la clé publique P à un deuxième système ;

◦ réception, en provenance du deuxième système, de données chiffrées (SUCI) ;

◦ calcul d'au moins une coordonnée (CD1) d'un point intermédiaire SP1, de la courbe elliptique, égal à un quatrième produit tel que SP1=[k]Q' ;

◦ dérivation d'au moins une clé (KY1, V1, KMAC1) par application d'une fonction (F1) de dérivation de clé à ladite au moins une coordonnée (CD1) du point intermédiaire SP1 ; et

◦ déchiffrement des données chiffrées à partir de ladite au moins une clé dérivée lors de ladite dérivation, de sorte à obtenir des données déchiffrées.

**2**

**3**

**4**

**6**

**UR**

RQ1

S2

S4 ~ | Génération SUCi |

SUCi

S6

S8 ~ | Détermination du réseau |

SUCi

S10

S12 ~ | Déchiffrement SUCi ⟶ SUPi |

S14

Authentification + Canal sécurisé

SUPi

S16

S18 ~ | Attribution 5G - GUTi Enregistrement (SUPi, 5G - GUTi) |

5G - GUTi

S20

S22 ~ | Enregistrement 5G - GUTi |

S24 ~ | Renouvellement 5G - GUTi |

**ART ANTERIEUR**

**FIG.1**

**2**

**3**

**UR**

**4**

**6**

5G - GUTi

S30

S32 — Consultation
5G - GUTi ⟶ SUPi

SUPi

S36

S34

Authentification + Canal sécurisé

**ART ANTERIEUR**

**FIG.2**

(G, SUPi, Q, F1, F2)

| Génération aléatoire d'une clé secrète k | ∿S40 |

| Calcul d'une clé publique : P = [k]G | ∿S42 |

| Calcul d'au moins une coordonnée CD1 d'un point intermédiaire SP1 : SP1 = [k]Q | ∿S44 |

Dérivation de clés par application d'une fonction F1 de dérivation de clés à au moins une coordonnée de SP1 :

$$SP1 \xrightarrow{F1}$$ 
- Clé de chiffrement KY1
- Vecteur d'initialisation V1
- Clé MAC KMAC1

∿S46

Détermination de SUCi (Identifiant chiffré) par chiffrement de SUPi

$$SUPi \xrightarrow{F2(KY1,V1),KMAC1} SUCi \ (MC1)$$

∿S48

Envoi de la clé publique P et de l'identifiant chiffré SUCi (MC1)

∿S50

# FIG.3

**6**

(a, F1, F3)

| Réception : SUCi (MC1), P | S60 |

| Calcul d'au moins une coordonnée CD1<br>du point intermédiaire SP1 :<br>[a] P = [a] [k] G = [k] [a] G = [k] Q = SP1<br>avec Q = [a] G | S62 |

Dérivation de clés par application de la
fonction F1 de dérivation de clés à au
moins une coordonnée de SP1 :

$$SP1 \xrightarrow{\ F1\ } \begin{cases} \text{- Clé de chiffrement KY1} \\ \text{- Vecteur d'initialisation V1} \\ \text{- Clé MAC KMAC1} \end{cases}$$

S64

Vérification de l'intégrité de SUCi :

S68 — | Calcul du MAC de SUCi : MC2 |

S70 — | MC1 $\overset{?}{=}$ MC2 |

S66

| Déchiffrement de SUCi à partir de<br>KY1 et V1 pour déterminer SUPi | S72 |

| Authentification | S74 |

# FIG.4

**FIG.5**

DV1

MD2 — Premier module de détermination
de clé : d' de N bits

MD1 —

MD4 — Premier module de calcul :
G' = [d'] G
Q' = [d'] Q

MD6 — Deuxième module de détermination de clé :
k de M bits

MD8 — Deuxième module de calcul :
P = [k] G'
SP1 = [k] Q'

MD7 —

MD10 — Module de dérivation de clés :
KY1, V1, KMAC1

MD12 — Module de chiffrement :

SUPi $\xrightarrow{\text{KY1,V1}}$ SUCi $\xrightarrow{\text{MC1}}$ SUCi (MC1)

MD14 — Module d'envoi : SUCi (MC1)

FIG.6

T1 — DV1 ○

(G, SUPi, Q, F1)

**S101** — Détermination d'une clé aléatoire d' de N bits

**S102** — Calcul d'une clé principale G' :
$$G' = [d']\, G$$

**S104** — Calcul d'une clé publique provisoire Q' du réseau HN1 :
$$Q' = [d']\, Q$$

**S100**

**S106** — Enregistrement : G', Q'

**S108** — Détermination d'une clé secrète k de M bits

**S110** — Calcul d'une clé publique P :
$$P = [k]\, G' = [k]\, [d']\, G$$

**S107**

**S112** — Calcul d'au moins une coordonnée CD1 d'un point intermédiaire SP1 tel que :
$$SP1 = [k]\, Q' = [k]\, [d']\, Q$$

## FIG.7

Dérivation de clés par application d'une fonction F1 de dérivation de clés à au moins une coordonnée de SP1 :

S114

$SP1 \xrightarrow{F1} \begin{cases} \text{- Clé de chiffrement KY1} \\ \text{- Vecteur d'initialisation V1} \\ \text{- Clé MAC KMAC1} \end{cases}$

S107

Chiffrement de données DT1 (DT1 = SUPi) à partir de la ou des clés dérivés en S114 pour obtenir des données chiffrées DTC1 (DTC1 = SUCi (MC1))

S116

Envoi de la clé privée P et de données chiffrées DTC1

S118

(Suite)

# FIG.7

**HN1**

(a, F3)

S130 — Réception : DTC1, P avec DTC1 = SUCi (MC1)

S132 — Calcul d'au moins une coordonnée CD2 du point intemédiaire SP1 :
[a] P = [a] [k] [d'] G = [k] [d'] [a] G = [k] [d'] Q = [k] Q' = SP1 avec Q = [a] G

S134 — Dérivation de clés par application de la fonction F1 de dérivation de clés à au moins une coordonnée de SP1 :

SP1 $\xrightarrow{\text{F1}}$ 
- Clé de chiffrement KY1
- Vecteur d'initialisation V1
- Clé MAC KMAC1

S136 — Vérification de l'intégrité de SUCi :

S138 — Calcul du MAC de SUCi : MC2

S140 — MC1 $\overset{?}{=}$ MC2

S142 — Déchiffrement de SUCi à partir de KY1 et V1 pour déterminer SUPi

S144 — Authentification

# FIG.8

Phase d'initialisation : G', Q' ~S100

Nouvelle
itération
avec
G', Q'

Phase de chiffrement : DT1 —F1—→DTC1 ~S107

## FIG.9

Phase de chiffrement ~S107

Mise à jour compteur :
CT1 = CT1 + 1 ~S162

S164

CT1 ⩾X ?
(Au moins X itérations
de la phase de chiffrement avec les
mêmes G', Q' ?)

Non

Oui

Nouvelle phase d'initialisation pour renouveler :
-Le générateur provisoire G'
-La clé provisoire Q' ~S100

## FIG.10

Itération I1    $P = [k_1] G'$
                $SP1 = [k_1] Q'$    ~S180

Itération I2    $P = [k_1] [k_2] G'$
                $SP1 = [k_1] [k_2] Q'$    ~S182

Itération I3    $P = [k_1] [k_2] [k_3] G'$
                $SP1 = [k_1] [k_2] [k_3] Q'$    ~S184

Itération IR    $P = [k_1] [k_2] ... [k_R] G'$
                $SP1 = [k_1] [k_2] ... [k_R] Q'$    ~S186

# FIG.11

Europäisches
Patentamt

European
Patent Office

Office européen
des brevets

# RAPPORT DE RECHERCHE EUROPEENNE

Numéro de la demande

EP 21 17 5809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FROSCH TILMAN ET AL: "How Secure is TextSecure?", 2016 IEEE EUROPEAN SYMPOSIUM ON SECURITY AND PRIVACY (EUROS&P), IEEE, 21 mars 2016 (2016-03-21), pages 457-472, XP032899546, DOI: 10.1109/EUROSP.2016.41 ISBN: 978-1-5090-1751-5 [extrait le 2016-05-09] * section 2 * * section 3 * ----- | 1-15 | INV. H04L9/08 H04L9/14 H04L9/30 H04W12/0431 |
| A | PAUL C VAN OORSCHOT ET AL: "On Diffie-Hellman Key Agreement with Short Exponents", 12 mai 1996 (1996-05-12), ADVANCES IN CRYPTOLOGY - EUROCRYPT '96. INTERNATIONAL CONFERENCE ON THE THEORY AND APPLICATION OF CRYPTOGRAPHIC TECHNIQUES. SARAGOSSA, MAY 12 - 16, 1996; [ADVANCES IN CRYPTOLOGY - EUROCRYPT. INTERNATIONAL CONFERENCE ON THE THEORY AND APPLICATION OF C, XP019194376, ISBN: 978-3-540-61186-8 * section 1 * * section 4 * ----- | 1-15 | |
| A | TAKESHI KOSHIBA ET AL: "Short Exponent Diffie-Hellman Problems", 26 février 2004 (2004-02-26), PUBLIC KEY CRYPTOGRAPHY - PKC 2004; [LECTURE NOTES IN COMPUTER SCIENCE;;LNCS], SPRINGER-VERLAG, BERLIN/HEIDELBERG, PAGE(S) 173 - 186, XP019002834, ISBN: 978-3-540-21018-4 * section 1.1 * * section 7 * ----- -/-- | 1-15 | |

**DOMAINES TECHNIQUES RECHERCHES (IPC)**

H04L
H04W

Le présent rapport a été établi pour toutes les revendications

| Lieu de la recherche | Date d'achèvement de la recherche | Examinateur |
|---|---|---|
| Munich | 8 octobre 2021 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches Patentamt
European Patent Office
Office européen des brevets

**RAPPORT DE RECHERCHE EUROPEENNE**

Numéro de la demande

EP 21 17 5809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KHAN HAIBAT ET AL: "Identity Confidentiality in 5G Mobile Telephony Systems", 21 novembre 2018 (2018-11-21), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 120 - 142, XP047494680, ISBN: 978-3-319-10403-4 [extrait le 2018-11-21] * le document en entier * | 1-15 | |
| A | BENDER JENS ET AL: "Security Analysis of the PACE Key-Agreement Protocol", 7 septembre 2009 (2009-09-07), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047399855, ISBN: 978-3-642-17318-9 * section 3.1 * * section 3.2 * | 1-15 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 8 octobre 2021 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)